(19) Europäisches Patentamt
European Patent Office
Office européen des brevets

(11) Publication number: **0 002 354 B1**

(12) # EUROPEAN PATENT SPECIFICATION

(45) Date of publication of patent specification: 20.05.81

(51) Int. Cl.[3]: C 08 F 8/36, C 08 C 19/20

(21) Application number: 78300685.1

(22) Date of filing: 28.11.78

(54) **A process for sulphonating elastomeric polymers.**

(30) Priority: 29.11.77 US 855701
29.11.77 US 855722
29.11.77 US 855771

(43) Date of publication of application:
13.06.79 Bulletin 79/12

(45) Publication of the grant of the European patent:
20.05.81 Bulletin 81/20

(84) Designated Contracting States:
BE DE FR GB NL

(56) References cited:
GB - A - 1 472 846
US - A - 3 836 511

(73) Proprietor: Exxon Research and Engineering Company
P.O.Box 390 200 Park Avenue
Florham Park New Jersey 07932 (US)

(72) Inventor: Makowski, Henry Stanislaus
2045 Winding Brook Way
Scotch Plains New Jersey (US)
Inventor: Lundberg, Robert Dean
4 Brian Drive
Bridgewater New Jersey (US)
Inventor: Bock, Jan
500 Juniper Lane
Bridgewater New Jersey (US)

(74) Representative: Field, Roger Norton et al,
Hanover Court 5 Hanover Square
London W1R OHQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 002 354 B1

# A process for sulphonating elastomeric polymers

This invention relates to the sulphonation of elastomeric polymers.

Various processes have been proposed for sulphonating elastomeric polymers and two such processes are described in the specifications of U.K. 1472846 and U.S. 3836511. However in the past difficulties have been experienced in sulphonation due to the presence of water in the polymer.

We have largely overcome such difficulties and the present invention concerns an improved process for the sulfonation of elastomeric polymers having more than 0.2 wt.% water to a conversion level, based on the conversion of sulfonating agent to incorporate sulfur in the sulfonated elastomeric polymer, of at least 70%; more preferably at least 80%; and most preferably at least 85%, wherein the % conversion is based upon the sulfonating agent being present in the stoichiometric amounts to the amount of available unsaturation in the elastomeric polymer; that is, the molar ratio of sulfonating agent to available unsaturation sites in the elastomeric polymer is 1.0 or below.

The sulfonation agents for the improved sulfonation processes are a mixture of a sulfur trioxide donor complexed with a Lewis base containing oxygen, phosphorus or sulfur with an acid anhydride

$$[(R-\underset{\underset{O}{\|}}{C}_2O] \quad \text{or an acid halide} \quad [(R-\underset{\underset{O}{\|}}{C})X],$$

wherein R is as given below and X is F, Cl, Br or I.

The improved sulfonating agents can also be formed from mixtures of acyl sulfate

$$[R-\underset{\underset{O}{\|}}{C}-OSO_3H]$$

with a carboxylic acid anhydride $[(R-\underset{\underset{O}{\|}}{C})_2O]$ or a carboxylic acid halide $[R-\underset{\underset{O}{\|}}{C}-X]$

or both, wherein R is $CH_3$—, $C_2H_5$—, $C_3H_7$—, $C_4H_9$—, $C_5H_{11}$, $C_6H_{13}$ or $C_6H_5CH_2$ or a mixture thereof. The molar ratio of

$$[R-\underset{\underset{O}{\|}}{C}]_2O \quad \text{and/or} \quad R-\underset{\underset{O}{\|}}{C}-X \quad \text{to} \quad R-\underset{\underset{O}{\|}}{C}-OSO_3H$$

or the complex is at least one.

The improved sulfonation agent combination can be formed by simply mixing the constituents together or generated through the reaction of various other reagents. Exemplary systems for generating the reagents are described below.

I. *Complex of Sulfur Trioxide·Lewis Base and Carboxylic Acid Anhydride*

$$(R-\underset{\underset{O}{\|}}{C})_2O \text{ moles/complex moles} \geq 1.0$$

wherein the complex is an $SO_3$ donor·Lewis base.

II. *Complex of Sulfur Trioxide·Lewis Base and Acyl Halide*

$$R-\underset{\underset{O}{\|}}{C}-X \text{ moles/complex moles} \geq 1.0$$

wherein the complex is an $SO_3$ donor·Lewis base.

In these instances, if any of the $SO_3$ complex sulfonation reagent decomposes through co-reaction with water

$$\text{Lewis Base} \cdot SO_3 + H_2O \rightarrow H_2SO_4 + \text{Lewis Base}$$

a new sulfonation reagent is quickly regenerated through the reaction of the newly formed sulfuric acid with the excess carboxylic acid anhydride or excess acyl halide which is mixed with the $SO_3$ donor·Lewis base (complex).

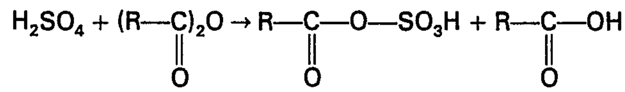

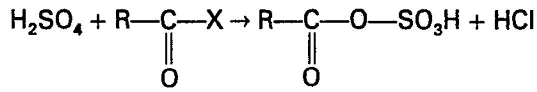

Since the carboxylic acid anhydride and acyl halide are equally effective in reaction with sulfuric acid thereby maintaining reagent strength, then mixtures of the two can be employed.

The molar ratio of $SO_3$ donor to the Lewis base complexing agent may be as high as 15 to 1, but is preferably less than 9:1, more preferably 4:1 to 1:1, e.g. 2:1.

III. *Complex of $SO_3$ Lewis Base Carboxylic Acid Anhydride and Acyl Halide*

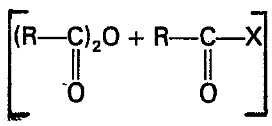


wherein the complex is an $SO_3$ donor·complex.

IV. *Sulfuric Acid and Carboxylic Acid Anhydride*

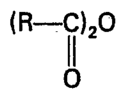


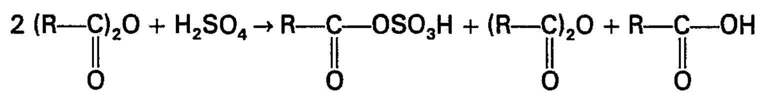

V. *Sulfuric Acid and Acyl Halide*

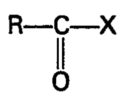


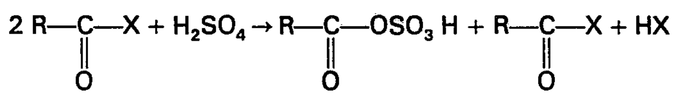

In these instances any acyl sulfate which decomposes to sulfuric acid through co-reaction with water

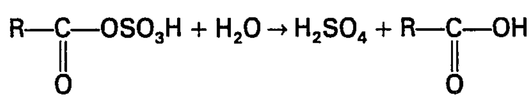

is quickly regenerated through the reaction of the newly formed sulfuric acid with excess carboxylic acid anhydride or excess acyl halide. Since the acid anhydride and acyl halide are equally effective in eliminating water and maintaining reagent strength, then mixtures of the two can be employed.

VI. *Sulfuric Acid, Carboxylic Acid Anhydride, And Acyl Halide*

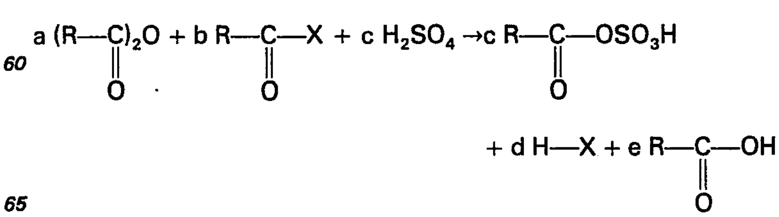

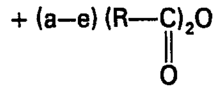

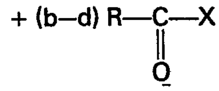

Another especially desirable alternative sulfonation agent to be used with elastomeric polymers having more than 0.2 wt.% water is a mixture of acid anhydride and halo sulfonic acid.

VII. *Halosulfonic Acid and Carboxylic Acid Anhydride*

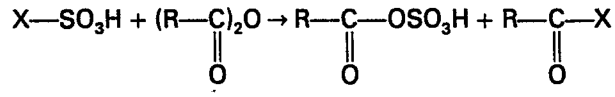

When the reagent acyl sulfate is generated from halosulfonic acid and carboxylic acid anhydride, a by-product acyl halide is formed. When water impurity reacts with the acyl sulfate to form sulfuric acid and carboxylic acid, the acyl halide co-reacts with the sulfuric acid to regenerate acyl sulfate as described under Method V.

It is possible in the generation of reagents according to Methods IV, V and VI to form the reagents and effect the process in the following different ways:

A. Preform reagent from sulfuric acid and desired excess of acid anhydride or acyl halide.
B. Preform reagent from sulfuric acid and sufficient acid anhydride or acyl halide. Add excess acid anhydride or acyl halide to the polymer cement prior to reagent addition.
C. Prepare reagent in situ by addition of excess acid anhydride or acyl halide to the polymer cement followed by slow addition of sulfuric acid.

Reagent from Method VII cannot be generated in situ in the case of unsaturated polymers since the reaction of halosulfonic acid with polymer unsaturation is extremely rapid so that reaction with acid anhydride hardly occurs and a gelled polymer mass results. However, reagent from Method VII can be pre-generated and used according to Methods A and B.

Other alternative sulphonating agents are formed from either a mixture of $(RCO)_2O$, $RCO_2H$ and $SO_3$ or a mixture of $(RCO)_2O$, $RCO_2M$ and $ClSO_3H$, wherein M is lithium, sodium, potassium, cesium or a mixture thereof.

The carboxylic acid anhydride or the acyl halide or both can be added to the wet polymer cement followed by the addition of a solution of the complex of the $SO_3$ donor·Lewis base or $H_2SO_4$. Alternatively, the carboxylic acid anhydride or the acyl halide can be mixed with the solution of the $SO_3$ complex or the $SO_3$ donor·Lewis base or $H_2SO_4$ prior to the addition to the polymer cement.

The carboxylic acid anhydrides and acyl halides are derived from carboxylic acids having a solubility of at least 0.2 grams/100 ml of water at 25°C. Typical carboxylic acids from which the anhydrides and acyl halides are derived are acetic acid, propionic acid, butyric acid, valeric acid or caproic acid or mixtures thereof. The preferred carboxylic acid anhydride is acetic anhydride because of its low molecular weight, availability and effectiveness.

The acyl halides may be acyl fluoride, acyl chloride, or acyl bromide, preferably the acyl chloride. Just as with the carboxylic acid anhydride, the preferred acyl chloride is acetyl chloride because of its low molecular weight, its availability and its effectiveness.

Therefore, the sulfonating agent of the present invention can be generally defined as a mixture of a carboxylic acid anhydride or an acyl halide or both with an acyl sulphate or a complex of a sulfur trioxide donor and a Lewis base containing oxygen, sulfur or phosphorus wherein the molar ratio of acid anhydride or acyl halide or both to complex is at least 1 and at least 70% of the amount of sulfonating agent present in the reaction zone that does not exceed the stoichiometric amount of sulfonating agent required to react with all the available sites of unsaturation in the elastomeric polymer is converted to sulfonate groups on said elastomeric polymer; more preferably the conversion is at least 80%, and most preferably the conversion is at least 85%, wherein the molar ratio of sulfonating agent to available unsaturation sites in the elastomeric polymer is 1.0 or less.

The % conversion, or conversion level, is based on the conversion of the reagent to sulfur-containing groups incorporated within the sulfonated polymers. Sulfonate groups are those groups containing the $SO_3$ moiety connected through a sulfur atom to a carbon atom

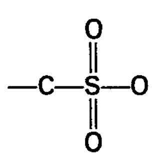

The sulfonate group introduced via sulfonation is typically a sulfonic acid

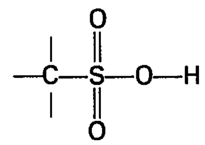

or other sulfonate precursor group depending upon the olefinic structure to be sulfonated. These compounds are generally easily reacted with metallic bases to the corresponding metal sulfonates

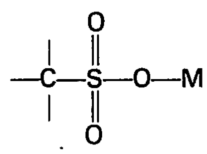

During titration of sulfonated polymers with sodium hydroxide, or other metallic bases, the sulfonate compounds consume 1 equivalent of sodium hydroxide

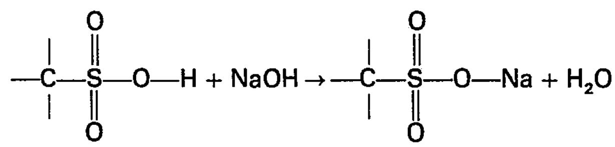

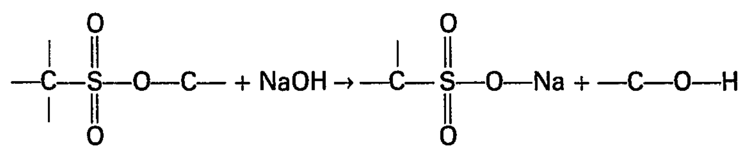

Sulfate groups are those groups containing the $SO_4$ moiety connected to a carbon atom within the polymer through one of the oxygen atoms

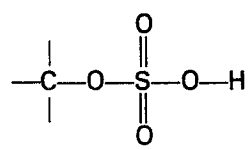

During titration of sulfonated polymers with bases such as sodium hydroxide sulfates consume two equivalents of base per sulfate group per mole of sulfur

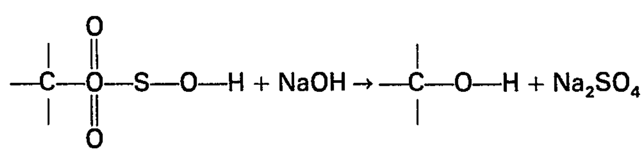

to produce a neutral alcohol and sodium sulfate.

Sulfonated polymers can be readily analyzed for their sulfur contents through procedures such as the Dietert method and the Paar method. When the sulfur content determined from sulfur analysis corresponds on a molar basis to the equivalents of base consumed during titration all of the combined sulfur is in sulfonate form. However, if the equivalents of base consumed during titration exceeds that of the molar sulfur content, then at least some of the combined sulfur is in sulfate form. When all of the sulfur is in sulfate form, then the equivalents of base is exactly twice that of the molar sulfur content.

When sulphonation occurs in the absence of sulfation, the sulfation reaction is a very low-yield reaction (based on the conversion of the original sulfonating agent to sulfur containing groups within the polymer). Consequently, high-yield sulfonation reactions can be considered to result in little, if any, sulfation.

The sulfonating agent reacts with the elastomeric polymers of this invention through unsaturation sites of the elastomeric polymer and not through the saturated backbone. Thus, the achievable sulfonate content is limited by the amount of available unsaturation in the elastomeric polymer. For example, if the polymer contains 20 mmoles of unsaturation per 100 grams of polymer, then it will be

possible to introduce only 20 mmoles of sulfonate groups per 100 grams of polymer. If higher sulfonate contents are desired, then the starting polymer must contain at least as much unsaturation.

It should be obvious to those skilled in the art that when an excess sulfonating agent is added on a molar basis to an unsaturated polymer, the conversion of sulfonating agent to sulfur-containing groups can never be 100%. For example, when two moles of sulfonating agent are added per mole of available unsaturation, a maximum conversion of only 50% is possible. It is certainly within the scope of this invention to use excesses of reagent and obtain reduced conversions of sulfonating agent. However, this is both unnecessary and undesirable. Of course, reagent cost increases, and in some instances some undesirable side reactions can occur with excess reagent present. In addition, the subsequent neutralization of the sulfonation mixture becomes more complicated and costly due to the larger quantities of base required for full neutralization of the sulfonation mixture.

For the invention described herein, conversion of the reagent has been determined under conditions where the molar ratio of sulfonating agent to available unsaturation is 1.0 or below. If, for example, the polymer contains 50 mmoles of unsaturation per 100 grams of polymer, no more than 50 mmoles of reagent can be used to determine reagent conversion. Generally it is desirable to use less than one mole of reagent per mole of available unsaturation to achieve the sulfonate levels which produce desirable changes in polymer properties. Although higher levels of sulfonating agent can be used for the process of introducing sulfonate groups, the efficiency of the sulfonation reaction cannot be determined under these circumstances.

The amount of desirable sulfonation depends on the particular application. However, the elastomeric polymer must be sulfonated at 15 to 50 meq. sulfonate groups/100 g of polymer, preferably at 20 to 40 meq. sulfonate groups/100 g of polymer. The sulfonate content of the polymer is determined by both titration of the sulfonate groups and Dietert sulfur analysis. In the titration of the sulfonate groups, the polymer is dissolved in solvent consisting of 95 parts by volume of toluene and 5 parts by volume of methanol at a concentration level of 50 grams per liter of solvent. The polymeric sulfonate is titrated with ethanolic sodium hydroxide to an Alizarin Thymolphthalein end point.

The elastomeric polymers of the present invention which are sulfonated by the aforementioned sulfonating agents are derived from synthetic and natural polymers having olefinic unsaturation sites through which sulfonation occurs, wherein the polymer has from 0.1 to 5.0 mole % olefinic unsaturation. The unsaturation sites can be in the polymer backbone, pendant therefrom or cyclic, except that aromatic containing polymers are excluded from this description. In particular, the unsaturated polymers of this present invention include low unsaturated elastomeric polymers such as Butyl rubber, or EPDM terpolymers.

Alternative unsaturated polymers are partially hydrogenated polyisoprene, partially hydrogenated polybutadienes, Neoprene, styrene-butadiene copolymers and isoprene-styrene random copolymers. Highly unsaturated elastomers other than Neoprene, such as polybutadiene would be contemplated in this invention in terms of pacifying the water contained in the sulfonation cement. However, such high unsaturation polymers gel with the reagents of this invention and useless products result.

The expression "Butyl rubber" as employed in the specification and claims is intended to include copolymers made from polymerization reaction mixtures having therein from 70 to 99.5% by weight of an isoolefin which has 4 to 7 carbon atoms per molecule, e.g. isobutylene and 0.5 to 30% by wt. of a conjugated multiolefin having from 4 to 14 carbon atoms per molecule, e.g. isoprene. The resulting copolymer contains 85 to 99.8% by wt. of combined isoolefin and 0.2 to 15% of combined multiolefin. Butyl rubber generally has a Staudinger molecular weight of 20,000 to 500,000, preferably about 25,000 to 400,000, especially 100,000 to 400,000 and a Wijs Iodine No. of 0.5 to 50, preferably 1 to 15. The preparation of Butyl rubber is described in U.S. Patent 2,356,128. For the purposes of this invention, the Butyl rubber may have incorporated therein from 0.2 to 10% of combined multiolefin, preferably 0.5 to 6%, more preferably 1 to 4%, e.g. 2%. Illustrative of such a Butyl rubber is Exxon Butyl 268 (Exxon Chemical Co.), having a mole percent unsaturation of 2.0% and a Mooney viscosity (ML 1 + 3, 260°F.) of 50—60.

Low molecular weight Butyl rubbers, i.e., Butyl rubbers having a viscosity average molecular weight as measured by GPC of 5,000 to 85,000 and a mole percent unsaturation of 3 to 4% may be sulfonated by the process of this invention. Preferably, these polymers have a viscosity average molecular weight as measured by GPC of 25,000 to 60,000.

The term "EPDM" is used in the sense of its definition as found in ASTM—D—1418—64 and is intended to mean a terpolymer containing ethylene and propylene in the backbone and a diene in a side chain. Illustrative methods for producing these terpolymers are found in U.S. Patent 3,280,082, British Patent 1,030,289 and French Patent 1,386,600. The preferred terpolymers contain 40 to 75 wt. % ethylene and 1 to 10 wt. % of a diene monomer, the balance of the polymer being propylene. Preferably, the polymer contains 45 to 70 wt. % ethylene, e.g. 50 wt. % and 2.6 to 9.0 wt. % diene monomer, e.g. 5.0 wt. %. The diene monomer is preferably a nonconjugated diene. The $\overline{M}n$ as measured by GPC of the terpolymer is preferably 10,000 to 200,000, more preferably 15,000 to 100,000, and most preferably 20,000 to 60,000. The Mooney viscosity (ML 1 + 8) of the terpolymer at 212°F. is preferably 5 to 60, more preferably 10 to 50 and most preferably 15 to 40, e.g. 20. The $\overline{M}v$

as measured by GPC of the EPDM is preferably below 350,000 and more preferably below 300,000, e.g. 270,000. The $\overline{M}w$ as measured by GPC of the EPDM is preferably below 500,000 and more preferably below 350,000, e.g. 343,000.

Illustrative of these nonconjugated diene monomers which may be used in the EPDM terpolymer (EPDM) are 1,4-hexadiene, dicyclopentadiene, 5-ethylidene-2-norbornene, 5-methylene-2-norbornene, 5-propenyl-2-norbornene and methyl tetrahydoindene. A typical EPDM is Vistalon 2504 (Exxon Chemical Co.) a terpolymer having a Mooney viscosity at 212°F. of 40, and having 50 wt. % of ethylene, 45 wt. % of propylene and 5.0 wt. % of 5-ethylidene-2-norbornene. (The word 'Vistalon' is a registered Trade Mark in the United Kingdom.) Vistalon 3708 (Exxon Chemical Co.) is a terpolymer having a Mooney viscosity at 260°F. of 45—55 and having 64 wt. % of ethylene, 3.3 wt. % of 5-ethylidene-2-norbornene and 32.7 wt. % propylene. Vistalon 6505 (Exxon Chemical Co.) is a terpolymer having a Mooney viscosity at 260°F. of 45—55 and having 53 wt. % of ethylene, 9.0 wt. % of 5-ethylidene-2-norbornene and 38 wt. % of propylene. Nordel 1320 (DuPont) is another EPDM terpolymer having a Mooney viscosity at 212°F. of 25 and having 53 wt. % of ethylene and 3.5 wt. % of 1,4-hexadiene. (The word 'Nordel' is a registered Trade Mark in the United Kingdom.) The aforementioned elastomeric polymers can be broken down through a combination of shear and heat such as in an extruder to form lower molecular species having lower Mooney viscosities. For example, Vistalon 2504 can be reprocessed through an extruder to a Mooney viscosity at 212°F. of 20 with an $\overline{M}n$ of 26,000 and an $\overline{M}w$ of 125,000 wherein the reprocessed V—2504 is designated as Vistalon 2504—20.

In carrying out the sulfonation process of the present invention, a cement which contains an olefinically unsaturated elastomeric polymer dissolved in a solvent is contacted with a sulfonating agent, wherein the solvent is non-reactive to the sulfonating agent and to the unsaturated elastomeric polymer. The solvent is preferably a cycloaliphatic hydrocarbon, an aliphatic hydrocarbon, chlorinated aliphatic hydrocarbon or a halogenated aromatic hydrocarbon. Illustrations of these solvents are: isopentane, cyclopentane, n-pentane, cyclohexane, isohexane, n-hexane, heptane, 1,2-dichloroethane, methylene chloride or chlorobenzene, and mixtures thereof. The concentration of the elastomeric polymer in the neutral solvent is 2 to 25 wt. %, preferably 5 to 20, and more preferably 10 to 15.

The sulfonating agent is formed from a mixture of a carboxylic acid anhydride or acyl halide with $H_2SO_4$ or a sulfur trioxide donor complexed with a Lewis base containing oxygen, sulfur or phosphorus. The term "sulfur trioxide donor" as used in the specification means a compound containing available sulfur trioxide. Illustrative of such sulfur trioxide donors are $SO_3$, chlorosulfonic acid, and fluorosulfonic acid. The term "complexing agent" as used in the specification means a Lewis base suitable for use in the practice of this invention, wherein Lewis base is an electron pair donor. Illustrative of Lewis bases suitable for use as complexing agents are certain phosphorus compounds. While the phosphorus compound may be either inorganic or organic, it is preferred that the phosphorus compound be an organic compound. Various organic phosphites, phosphinites, phosphinates, phosphonates, phosphates, phosphonites, and phosphines may be used as the complexing agent. The organic substituents consist of $C_1$ to $C_{10}$ alkyl, aryl, alkaryl or aralkyl groups. Ethers and thioethers have been found useful for complexing sulfur trioxide donor to facilitate reaction with the unsaturation of polymer molecules. The ethers and thioethers may contain one, two or more ether oxygens or sulfurs and may be linear or cyclic. Illustrative of the ether Lewis bases suitable for use in the practice of this invention are paradioxane, 2,3-dichloro-1,4-dioxane, metadioxane, 2,4-dimethyl-1,3-dioxane, 2-phenyl-1,3-dioxane, diethyl ether, trioxane and bis (2-dichloroethyl)-ether. The preferred oxygen containing bases are p-dioxane, tetrahydrofuran and bis-(2-dichloroethyl) ether. Illustrative of the thioethers are: diethyl sulfide, dibutyl sulfide, and tetrahydrothiophene. Other oxygen containing Lewis bases suitable as complexing agents are carboxylic acid esters, wherein the carboxylic acid is a $C_1$ to $C_{10}$ aliphatic acid, benzoic acid or phenylacetic acid. Illustrative of such esters are benzyl acetate, butyl acetate, butyl propionate, methyl benzoate, hexyl acetate, isobutyl benzoate, ethyl-o-bromobenzoate, p-nitrophenyl acetate, ethyl-n-butyrate, ethyl stearate and ethyl phenyl acetate. The preferred solvents for preparation of the complexes of sulfur trioxide donor with complexing agents containing oxygen are chlorinated hydrocarbons. Illustrative of such chlorinated solvents are carbon tetrachloride, dichloroethane, chloroethane, chloroform, and methylene chloride. The complexes may also be prepared by direct addition of reagents, if precautions are taken to dissipate evolved heat.

When a mixture of RCOX or $(RCO)_2$ and $H_2SO_4$ is used the sulfonating species of the present invention is RCOO—$SO_3H$, wherein R can be $CH_3$, $C_2H_5$, $C_3H_7$, $C_4H_9$, $C_5H_{11}$, $C_6H_{13}$, or $C_6H_5$—$CH_2$. The sulfonating species can be formed from a plurality of various chemical reactions as illustrated in the following equations:

1. $RCO_2H + SO_3 \rightarrow RCO_2SO_3H$

2. $(RCO)_2O + H_2SO_4 \rightarrow RCO_2SO_3H + RCO_2H$

3. $RCOX + H_2SO_4 \rightarrow RCO_2SO_3H + HX$

4. $RCO_2H + XSO_3H \rightarrow RCO_2SO_3H + HX$

5. $RCO_2M + XSO_3H \rightarrow RCO_2SO_3H + MX$

6. 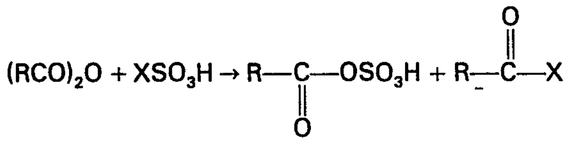

wherein M is sodium, potassium, lithium or cesium and X is fluorine, chlorine, bromine or iodine.

The more preferred acyl sulfates are those prepared according to equations 2, 3, 4, and 6, since acyl sulfates generated according to equations 1 and 5 generally require solvents for their preparation and require separate addition of acid anhydride or acid halide to the cement. Obviously, these reagents which can be prepared and used neat are more preferred.

The most preferred acyl sulfate sulfonation agents are those which can be generated from $H_2SO_4$ or $XSO_3H$ in the absence of solvents (2, 3 and 6). Although the preferred sulfonation agents can be prepared in solution with such solvents as chlorinated aliphatics, such as 1,2-chloroethane or chloroform, and aromatics, such as chlorobenzene, it is more desirable to prepare them neat. The most preferred process is the generation of the sulfonation agent in situ, i.e., by adding the acid anhydride or acid halide to the polymer cement followed by addition of sulfuric acid (2,3).

The acyl sulfate is highly reactive to water according to the following equation.

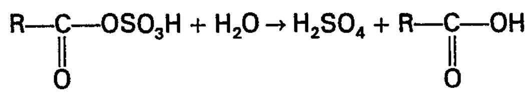

The complex is highly reactive to water as illustrated by the following equation:

$$SO_3 \cdot \text{Lewis Base} + H_2O \rightarrow H_2SO_4 + \text{Lewis Base}$$

If the elastomeric polymer has only 0.5 wt. % of water (27.8 mmoles per 100 grams of polymer), the water can almost completely consume the complex, when the elastomeric polymer is to be sulfonated to a level of 25 to 35 mmoles of sulfonate groups. In the sulfonation of unsaturated elastomers, the $H_2SO_4$ generated from the decomposition of the complex by reaction with water is incapable of forming sulfonate groups; e.g.

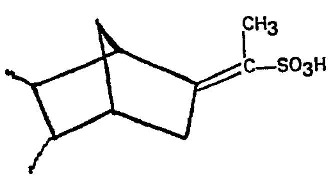 but rather forms sulfates 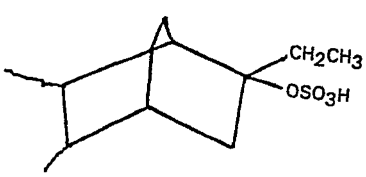

The formation of the sulfate groups is highly undesirable. Thermally these neutralized sulfate groups are less stable than those of the sulfonate groups. Furthermore, the sulfate groups are readily hydrolyzed whereas the desired sulfonate form of the elastomeric polymers are gel-free and hydrolytically stable. Gel-free means that the sulfonated polymer contains less than 5 wt. % gel, more preferably less than 3, and most preferably less than 1 as measured by stirring a given weight of polymer in a solvent comprised of 95 toluene-5-methanol at a concentration of 50g/liter for 24 hours, allowing the mixture to settle, withdrawing a weighed sample of the supernatant solution and evaporating to dryness.

Hydrolytically stable means that the acid function, in this case the sulfonic acid, will not be eliminated under neutral or slightly basic conditions to a neutral moiety which is incapable of being converted to a highly ionic functionality. When the sulfate hydrolyzes, the polymer functionality is reduced to an alcohol which has no ionic properties and all coulombic attractions are lost. Therefore, during the sulfonation reaction of unsaturated elastomers containing highly substituted unsaturation, it is necessary to minimize the adverse effect of water. Most often, the water is present in the elastomeric polymer to be sulfonated, wherein the elastomeric polymer has not been thoroughly dried, i.e. the elastomeric polymer contains more than 0.1 wt. % water. U.S. patent 3,642,728 teaches that the reactions of complexes of $SO_3$ with the unsaturation sites of polymer chains is non-quantitative and that it is desirable to use excess complex to give the required amount of sulfonation. However, although by using excess reagent, higher sulfur contents are obtained complexities arise in unavoidable side reactions occurring such as with sulfuric acid and the economics of manufacture are effected. In addition, the neutralization chemistry of such a sulfonated system is complex and also expensive and results in the incorporation of undesirable inorganic salts in the isolated neutralized sulfonated

elastomer. For these reasons, it is undesirable to use excesses of $SO_3$ complexes. In fact, it is most desirable to obtain conversions and thereby use little or no excess. High conversions of $SO_3$ donor·Lewis base complexes to the sulfonated elastomeric polymer can be readily achieved through the use of carboxylic acid anhydride and acyl halides. Most all commercial elastomers are isolated through "steam stripping", a process where the polymer cement is added to hot water and the hydrocarbon solvent is flashed off leaving a water-wet polymer crumb. The crumb is generally dewatered and dried in suitably designed extruders. Extremely low molecular weight polymers, which are especially desirable for the preparation of thermoelastic materials through sulfonation, are very difficult to dry and frequently contain more water than their higher molecular weight counterparts. And so it is difficult to reproducibly sulfonate such wet polymers unless accurate water analyses are available for each batch of polymer to be sulfonated. Since water levels are frequently quite variable, it becomes impractical to analyze or even rely on what analyses are obtained. According to this invention, even wet polymer cements can easily be sulfonated to quality products containing the precise number of sulfonate groups desired.

The hydrocarbon cement of elastomeric polymers of the present invention may have 0.2 to 5 wt. % of water, preferably 0.2 to 4.0 and more preferably 0.2 to 3 based on the elastomeric polymer.

While frequently the source of water in polymer cements is the undried base polymer itself, it is possible that water can find its way to the polymer cement in other ways. For example, the solvent for preparing the polymer cement may contain water, the sulfonation kettle may not have been dried after cleaning, and leaking water or steam lines may result in a wet sulfonation cement.

Sulfonation of the elastomeric polymer is conducted at a temperature between −100°C. to +100°C., wherein the reaction time is preferably 1 to 60 minutes, more preferably 5 to 45 minutes and most preferably 15 to 30 minutes. The sulfonation of less substituted olefinic structures such as derived from 1,4-hexadiene terpolymers requires somewhat higher temperatures, e.g. 50°C., when unsaturation levels are low, e.g. less than 2 mole %. More highly substituted olefinic structures, such as derived from 5-ethylidene-2-norbornene are rapidly sulfonated at room temperature and below even at low levels of unsaturation. The generated sulfonated elastomeric polymer is soluble in the solvent of the cement. The sulfonation reaction is quenched with an aliphatic alcohol such as methanol, ethanol, isopropanol, benzyl alcohol, a cycloaliphatic alcohol, such as cyclohexanol, or an aromatic hydroxyl compound such as phenol.

The most preferred solvents of this present invention for the mixture of $RCO_2SO_3H$ and $(RCO)_2O$ or RCOX are the lower molecular weight aliphatic and cycloaliphatic saturated carbon-hydrogen compounds comprising from 4 to 7 carbon atoms per molecule, preferably 5 to 7 carbon atoms per molecule, and mixtures thereof.

Examples of such solvents are n-butane, isopentane, neopentane n-pentane, cyclopentane, n-hexane, isohexane, cyclohexane, commercial Exxon hexane, n-heptane, commercial Exxon heptane. The sulfonation reagents of this invention must contain a carboxylic acid anhydride or acyl halide in order that high reagent conversions may be achieved. For mixtures of said complex and $(RCO)_2O$ or RCOX suitable non-reactive solvents are aliphatic hydrocarbons, chlorinated aliphatic hydrocarbons, aromatic hydrocarbons, chlorinated aromatic hydrocarbons or a mixture thereof.

Polymers containing unsaturation and sulfonate groups have been found to be somewhat deficient in thermostability. Therefore, it is desirable to neutralize a substantial portion of the sulfonate groups as part of the manufacturing of sulfonated elastomeric polymer. In addition, neutralization is required to fully develop the physical properties of the sulfonated polymer. In preparing the ionomer, it is desirable to neutralize essentially every sulfonate group. However, lower degrees of neutralization, e.g. 95% are useful in the practice of this invention.

The neutralizing agents which may be used are the metal hydroxides, metal carbonates, alkoxides or metallic salts having 1 to 8 carbon atoms per molecule or metallic salts of carboxylic acids, wherein the metal ion or the metallic salt of the carboxylic acid is iron, aluminum, antimony, lead or a metal of Group I—A, II—A, I—B or II—B of the Periodic Table of Elements or a mixture thereof. The neutralization agents which are dissolved in water or alcohols or mixtures thereof are added to the cement of the sulfonated elastomeric polymer thereby neutralizing the unneutralized sulfonate groups.

The carboxylate ion of the metallic salt of the carboxylic acid is derived from the following carboxylic acids as illustrated in the present invention; acetic, benzoic, lauric, palmitic, myristic, decanoic, octanoic, and stearic. However, other carboxylic acids of the same generic class can be readily employed and are considered within the scope of the invention. Useful examples of metal hydroxides are NaOH, KOH, LiOH, $Mg(OH)_2$ and $Ba(OH)_2$. Useful carbonates are the alkali metal carbonates.

The metal sulfonate containing polymers at the higher sulfonate levels possess extremely high melt viscosities and are thereby difficult to process. The addition of ionic group plasticizers markedly reduces melt viscosity and frequently enhances physical properties. These plasticisers which plasticise only the ionic groups and not the hydrocarbon backbone of the polymer are commonly called preferential plasticizers. These preferential plasticisers are a carboxylic acid or a metal salt of a carboxylic acid, wherein the metal ion of the metal salt of the carboxylic acid is iron, aluminum, antimony, lead or a metal of Groups I—A, II—A, I—B or II—B of the Periodic Tables of Elements or a

mixture thereof. The preferential plasticizer is incorporated into the neutralized sulfonated elastomeric terpolymer at 3 to 60 more preferably at 5 to 40, and most preferably at 7 to 25 parts per hundred by weight of neutralized sulfonated elastomeric polymer. The neutralizing agent and plasticizer can be the same chemical species such as a metallic salt of fatty acid in which case additional metallic salt of the fatty acid is added over what is needed for neutralization. Alternative preferential plasticizers are carboxylic acid esters, trialkyl phosphates, amines, or amides and mixtures thereof. The preferred plasticizers are stearic acid or metallic salts of stearic acid or a mixture thereof. The resultant neutrlaized sulfonated elastomeric polymer with preferential plasticizer is isolated as a crumb from the solution by conventional steam stripping and filtration. The wet crumb can be dried in a dewatering extruder, in a fluid bed dryer, or on a hot two-roll mill.

The dried neutralized sulfonated elastomeric polymer can be compounded with various additives (other than preferential plasticizers) in order to modify its physical and rheological properties. These additives are waxes, extender oils, fillers, pigments, ionic group plasticizers, antioxidants, stabilizers, or a mixture thereof. The additive or mixture of additives is incorporated into the neutralized sulfonated elastomer at a concentration level of less than 300 parts by weight per hundred parts by weight of neutralised sulfonated elastomeric polymer, more preferably 5 to 275; most preferably 10 to 250.

Alternatively, the unneutralized sulfonated elastomeric polymer can be isolated as a crumb by steam stripping. The additives are compounded into the fluxed unneutralized sulfonated elastomeric polymer, the neutralizing agent and plasticizer are then added, and fluxing is continued until the sulfonate groups have been neutralized to at least 95%. The advantage of this alternative method is that the viscosity of the unneutralized sulfonated elastomeric polymer is substantially lower than the viscosity of the neutralized sulfonated elastomeric polymer thereby facilitating better compounding with the additives to be incorporated.

The fillers employed in the present invention may be carbon blacks, talcs, ground calcium carbonate, water precipitated calcium carbonate, and delaminated, calcined and hydrated clays or a mixture thereof. Examples of carbon black are the furnace, channel or thermal blacks. These fillers may be incorporated into the blend composition at 10 to 200 parts per 100 parts by weight of the neutralized sulfonated elastomeric polymer, more preferably at 10 to 150 parts per hundred parts by weight and most preferably at 25 to 150 parts per hundred by weight.

The waxes employed in the present invention may be polyolefinics, paraffinic, aromatic, or naphthenic. In particular, the waxes employed in this present invention have a softening point of 135°F. to 220°F. (57 to 104°C), more preferably 135°F. to 200°F. (57 to 93°C) and most preferably about 150°F. to 200°F. (60 to 93°C). The preferred waxes have less than 2 wt. % of polar type compounds and an $\bar{M}n$ of 1000 to 5000, more preferably 1500 to 3000. The waxes contemplated for use in this present invention can be synthetic, petroleum or natural waxes.

The waxes may be incorporated into the blend composition at a concentration level of 1 to 50 parts by weight per 100 parts of the neutralized sulfonated polymers, more preferably 1 to 40, and most preferably 1 to 30.

The oils employed in the present invention are non-polar process oils having less than 2 wt. % polar type compounds as measured by molecular type clay gel analyses. These oils are selected from paraffinics ASTM Type 10B as defined in ASTM D—2226—70, Aromatics ASTM Type 102 or Naphthenics ASTM Type 104A, wherein the oil has a flash point by the open cup of at least 350°F., a pour point of less than 40°F., a viscosity of 70 to 3000 ssu's and a number average molecular weight of 400 to 1000, and more preferably 300 to 750. The preferred process oils are paraffinics. The oils may be incorporated into the blend compositions at 10 to 250 parts by weight per hundred parts by weight of the neutralized sulfonated elastomeric polymer, more preferably at 25 to 150; and most preferably at 50 to 150 parts by weight per 100 parts by weight.

A metallic hydroxide can be incorporated into the blend composition as a means of neutralizing any residual free carboxylic acid ionic plasticizer in the neutralized sulfonated terpolymer. The metallic hydroxide may be incorporated at a concentration level of less than 2.0 parts by weight per 100 parts by weight of the neutralised sulfonated elastomeric polymer, wherein the metal ion of the metallic hydroxide may be a metal of Group II—A of the Periodic Table of Elements, e.g., barium, calcium, and magnesium.

The advantages of both the reagents and processes for the sulfonation of wet polymer cements can be more readily appreciated by reference to the following examples and tables.

Comparative Example 1

The procedures of U.S. Patent 3,836,511 were repeated for the sulfonation of a commercial Vistalon 2504. Some of the Vistalon 2504 was dried on a hot (300°F) rubber mill and some was used as received.

Two neat acetyl sulfate reagents were prepared at acetic anhydride/$H_2SO_4$ ratios of 1.26 (Molarity = 5.73) and 1.39 (Molarity 5.36) as described in U.S. Patent 3,836,511.

Benzene solutions were prepared by dissolving 100 g of Vistalon 2504 as received (Runs A and C) or mill dried (Runs B, D, E, F, G) in 1500 ml. of benzene as described in U.S. Patent 3,836,511. In

three runs (E, F, G) 0.5 ml., 1.0 ml., and 2.0 ml of water, respectively, was added to the benzene cement.

Sulfonations were effected by adding 37.5 moles of freshly prepared acetyl sulfate reagent to the polymer cement at room temperature for 30 minutes. The acid form of the sulfonated polymer was isolated by steam stripping. The polymer was pulverized and washed in a Waring blender, and the wet crumb was dewatered and dried at about 49°C on a two-roll rubber mill.

Five grams of the sulfonated EPDM was dissolved in 100 ml. of 95 vol. toluene-5 vol. methanol, and the solution was titrated with 0.1 N ethanolic NaOH to an Alizarin-thymophthalein end-point. The results are detailed in Table I.

TABLE I

| Run | A | B | C | D | E | F | G |
|---|---|---|---|---|---|---|---|
| Vistalon 2504 | | | | | | | |
| Weight, g. | 100 | 100 | 100 | 100 | 100 | 100 | 100 |
| Condition | A.R.(a) | Dried | A.R.(a) | Dried | Dried | Dried | Dried |
| Solvent | Benzene | Benzene | Benzene | Benzene | Benzene | Benzene | Benzene |
| Volume, ml. | 1500 | 1500 | 1500 | 1500 | 1500 | 1500 | 1500 |
| Acetyl Sulfate | | | | | | | |
| Molarity | 5.73 | 5.73 | 5.36 | 5.36 | 5.36 | 5.36 | 5.36 |
| Acetic Anhydride /$H_2SO_4$ | 1.26 | 1.26 | 1.39 | 1.39 | 1.39 | 1.39 | 1.39 |
| Volume, ml. | 6.54 | 6.54 | 7.00 | 7.00 | 7.00 | 7.00 | 7.00 |
| Mmoles | 37.5 | 37.5 | 37.5 | 37.5 | 37.5 | 37.5 | 37.5 |
| Water Added, ml. | 0 | 0 | 0 | 0 | 0.5 | 1.0 | 2.0 |
| Mmoles | 0 | 0 | 0 | 0 | 27.8 | 55.5 | 111 |
| $SO_3H$ Content, meq /100 g | | | | | | | |
| By titration | 20.2 | 21.2 | 18.8 | 21.0 | 14.2 | 12.4 | 9.4 |
| By sulfur analysis | 15.9 | 18.9 | 15.9 | 18.4 | 12.5 | 10.2 | 8.9 |
| Conversion, % | 43 | 51 | 43 | 50 | 34 | 27 | 24 |

(A) A.R. = as received.

Sulfonations in benzene solvent in the absence of added water (Runs A, B, C, D) of themselves resulted in low acetyl sulfate conversions whether the neat reagent had an acetic anhydride/$H_2SO_4$ ratio of 1.26 or 1.39. Yet these conversions were identical to that obtained in U.S. Patent 3,836,511. The sulfonation of as-received Vistalon 2504 gave a 43% reagent conversion while drying of the polymer raised the conversion to 50%.

It appears that acetyl sulfate reagent reacts sufficiently with benzene to rule it out as a preferred or choice solvent.

When benzene cements containing 0.5, 1.0, and 2.0 wt. % water on polymer (Runs E, F, G) were sulfonated with 5.36 M acetyl sulfate reagent, the incorporation of sulfur dropped to 34, 27 and 24%, respectively.

These data show that the reagents described in U.S. Patent 3,836,511 are unable to sulfonate wet benzene cements to high reagent conversion and to quality products.

Comparative Example 2

A solution of 100 g of Vistalon 2504—20* in 1000 ml. of hexane was sulfonated with 5.74 ml. (60.75 mmoles) of acetic anhydride and 2.10 ml. (37.5 mmoles $H_2SO_4$) of concentrated sulfuric acid according to the *in situ* method (described in Comparative Example 1). Eight separate runs were made varying in the amount of water added to the polymer cement prior to sulfonation.

Sulfonation termination and polymer work-up were as described in Comparative Example 1. Samples were titrated for acid and analysed for sulfur. The results are shown in Table II.

* Vistalon 2504—20 is a copolymer of ethylene, propylene and 5-ethylene-2-norbornene. The copolymer contained about 50 wt. % ethylene and about 5 wt. % ENB. It possessed a Mooney viscosity (ML. 1 + 8, 212°F.) of about 20. This polymer was produced through the hot extrusion breakdown of commercial 40 Mooney Vistalon 2504 and additionally had been dried on a hot rubber mill so that little water was contained in the polymer.

TABLE II

| | $H_2O$ Added | | | | | Sulfur Analysis | |
|---|---|---|---|---|---|---|---|
| | Ml. | Wt. % | Meq. | Color of Cement | $SO_3H$ Content by Titration, Meq. /100 g | Weight % S | $SO_3H$ Content, Meq /100 g |
| A | 0 | 0 | 0 | Purple | 32.8 | 1.02 | 31.9 |
| B | 0.1 | 0.1 | 5.6 | Purple | 30.2 | 0.975 | 30.5 |
| C | 0.3 | 0.3 | 16.7 | Purple | 29.2 | 0.855 | 26.7 |
| D | 0.6 | 0.6 | 33.3 | Brown | 23.2 | 0.595 | 18.6 |
| E* | 1.0 | 1.0 | 55.6 | Tan | 15.2 | 0.295 | 9.2 |
| F | 1.5 | 1.5 | 83.3 | Tan | 10.2 | 0.165 | 5.2 |
| G | 2.0 | 2.0 | 111 | Lt. Tan | 8.2 | 0.12 | 3.8 |
| H | 3.0 | 3.0 | 167 | Grey | 8.0 | 0.155 | 4.8 |

* 2.8 ml. (rather than 2.1 ml.) of concentrated $H_2SO_4$ was added.

The data show that as more water is added, the total amount of combined sulfur drops. In addition, as more water is added, the sulfur that is combining becomes more the sulfate rather than the sulfonate. The sulfur values are lower than the titration values since the sulfate group hydrolyzes off during titration to give a dibasic sulfuric acid rather than a monobasic sulfonic acid.

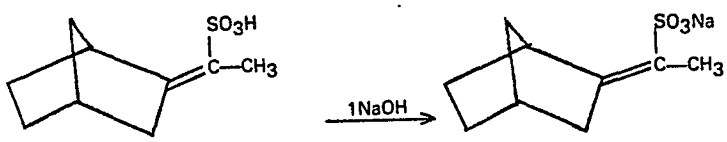


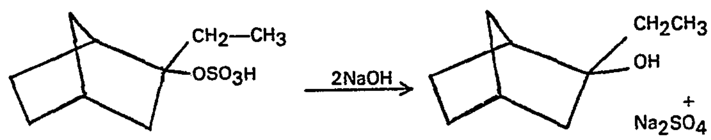


When about 1% water and more is present, it appears that all of the combined sulfur is in the sulfate form, i.e., there is very little or no sulfonic acid.

These examples clearly show that relatively low levels of water produce off-specification products which moderate levels of water produce totally undesirable products, i.e., products which are hardly sulfonated and contain a substantial amount of unstable sulfate groups.

Control:

100 g of 20 Mooney V—2504—20 of Comparative Example 1 in 1000 ml. hexane sulfonated at 25°C. with 60.75 mmoles of acetic anhydride and 37.5 mmoles $H_2SO_4$, quenched with 150 ml. isopropanol, and stabilized with 0.5 g of Antioxidant 2246.

Water Addition:

The desired amount of water was pipetted in, and the cement was stirred for one hour. The sulfonation was then effected as described above.

Sample Work-Up:

Samples of the cement were steam stripped, washed in a Waring blender with water, and dewatered on a rubber mill. Samples were titrated for acid, and sulfur contents were determined.

Example I

In this Example, 21 separate runs were made to determine the effects of water on the sulfonation and the effects of adding excess acetic anhydride on sulfonation. These runs and the results therefrom are detailed in Table III. In 1000 ml. of Exxon hexane was dissolved 100 g of Vistalon 2504—20 polymer of Comparative Example 2. The desired amount of water (if any) was added and the cement was stirred for about 30 minutes and the desired amount of acetic anhydride (listed in Table III) was added. Concentrated sulfuric acid (37.5 mmoles $H_2SO_4$) was dripped in at room temperature, and the mixture was stirred for 30 minutes at room temperature. Reaction was terminated by the addition of 150 ml. isopropanol, and 0.5 g of Antioxidant 2246 was added. The sulfonated polymer was isolated by steam stripping, washing with water in a Waring blender, and dewatering and drying on a warm rubber mill. Samples were dissolved (5 g/100 ml.) in 95 toluene/5 methanol and titrated with 0.1 N ethanolic NaOH to an Alizarin-thymolphthalein end-point. The samples were also analyzed for sulfur. Run B in this sample is considered to be the control.

It is seen that about an 88% conversion of reagent was obtained. In Run A where the acetic anhydride was reduced somewhat a reduced conversion (80%) of reagent to sulfonic acid was obtained. This was attributed to still some remaining moisture in the starting polymer. In Runs C, D and E, the acetic anhydride level was increased from that of the control, but the conversion to sulfonic acid (based on sulfonic acid) remained substantially unchanged.

In Runs F, J, N and R, 0.5, 1.0, 2.0 and 3.0 wt. % water was added deliberately to the cement prior to sulfonation with the amount of acetic anhydride used in control run. A dramatic reduction in acid value and sulfur content resulted just as described in Comparative Example 2.

In the remaining runs, acetic anhydride was added to those systems to which had been added water. The amount of acetic anhydride added was equal to and in excess of the amount of water that had been added. The results in Table III show that the excess acetic anhydride improves sulfonation, and conversion of reagent to sulfonic acid is again at least as good as that of the control. In Runs G, K, O and S, an amount of acetic anhydride equal to the added water was added. Conversion of reagent to sulfonic acid were 89%, 92%, 96% and 91%, respectively. The addition of 25 mmoles and 50 mmoles acetic anhydride in excess of the added water gave essentially identical results.

Thus, this example shows that water is effectively compensated for through the addition of at least an equivalent amount of acetic anhydride.

TABLE III

| Run | A | B | C | D | E | F | G | H | I | J | K |
|---|---|---|---|---|---|---|---|---|---|---|---|
| Water added, ml. | 0 | 0 | 0 | 0 | 0 | 0.5 | 0.5 | 0.5 | 0.5 | 1.0 | 1.0 |
| Mmoles | 0 | 0 | 0 | 0 | 0 | 27.8 | 27.8 | 27.8 | 27.8 | 55.5 | 55.5 |
| Acetic Anhydride, ml. | 4.43 | 5.70 | 7.09 | 9.45 | 11.82 | 5.70 | 8.32 | 10.69 | 13.05 | 5.70 | 10.95 |
| Weight, g | 4.79 | 6.15 | 7.66 | 10.21 | 12.76 | 6.15 | 8.99 | 11.54 | 14.09 | 6.15 | 11.82 |
| Mmoles | 47 | 60 | 75 | 100 | 125 | 60 | 88 | 113 | 138 | 60 | 116 |
| $(CH_3CO)_2O/H_2SO_4$ | 1.25 | 1.6 | 2.0 | 2.67 | 3.33 | 1.6 | 2.35 | 3.01 | 3.68 | 1.6 | 3.09 |
| $SO_3H$ Content, meq./100 g | | | | | | | | | | | |
| By Titration | 29.6 | 28.1 | 28.8 | 30.4 | 31.6 | 15.4 | 27.8 | 33.4 | 30.0 | 15.6 | 28.6 |
| By Sulfur Analysis | 29.3 | 32.0 | 33.0 | 33.0 | 32.3 | 18.6 | 32.5 | 34.7 | 33.4 | 8.3 | 33.6 |
| $H_2SO_4$ Conversion, % | 80 | 88 | 90 | 90 | 88 | 50 | 89 | 95 | 92 | 22 | 92 |

| Run | L | M | N | O | P | Q | R | S | T | U |
|---|---|---|---|---|---|---|---|---|---|---|
| Water Added, ml. | 1.0 | 1.0 | 2.0 | 2.0 | 2.0 | 2.0 | 3.0 | 3.0 | 3.0 | 3.0 |
| Mmoles | 55.5 | 55.5 | 111 | 111 | 111 | 111 | 167 | 167 | 167 | 167 |
| Acetic Anhydride, ml. | 13.30 | 15.66 | 5.70 | 16.19 | 18.55 | 20.91 | 5.70 | 21.4 | 23.80 | 26.62 |
| Weight, g | 14.37 | 16.92 | 6.15 | 17.48 | 20.03 | 22.59 | 6.15 | 23.15 | 25.70 | 28.25 |
| Mmoles | 141 | 166 | 70 | 171 | 196 | 221 | 60 | 227 | 252 | 277 |
| $(CH_3CO)_2O/H_2SO_4$ | 3.76 | 4.43 | 1.6 | 4.56 | 5.23 | 5.89 | 1.6 | 7.05 | 6.72 | 7.39 |
| $SO_3H$ Content, meq./100 g | | | | | | | | | | |
| By Titration | 32.4 | 32.0 | 16.0 | 31.0 | 33.2 | 29.4 | 13.6 | 28.4 | 33.0 | 32.4 |
| By Sulfur Analysis | 33.6 | 33.1 | 6.7 | 35.0 | 34.1 | 32.8 | 5.8 | 33.1 | 33.6 | 33.9 |
| $H_2SO_4$ Conversion, % | 92 | 91 | 18 | 96 | 93 | 90 | 16 | 91 | 92 | 93 |

## Example II

Twenty-one separate runs were made to determine the effects of water on the sulfonation of EPDM with acetyl sulfate derived from concentrated sulfuric acid and acetyl chloride and the effects of the addition of excess acetyl chloride on the sulfonation of wet cement. These runs and the results therefrom are detailed in Table IV.

In 1000 ml. of Exxon hexane was dissolved 100 g of a 20 Mooney EPDM of the same description as that used in Comparative Example 2. The desired amount of water (if any) was added followed by the desired amount of acetyl chloride (listed in Table IV). Concentrated sulfuric acid (2.10 ml., 37.5 mmoles) was dripped in at room temperature, and the mixture was stirred for 30 minutes at room temperature. Reaction was terminated with 100 ml. methanol and 0.5 g of Antioxidant 2246 was added. The polymers were worked up and analyzed as described in Comparative Example 1. Run B is considered to be the control where an 80% conversion of sulfuric acid to sulfonic acid was obtained. In Run A where the acetyl chloride was reduced somewhat a reduced conversion (74%) of sulfonic acid was obtained. This again was attributed to some still remaining moisture in the starting polymer. In Runs C, D and E, the acetyl chloride was increased over that of the control. Conversion increased even further in Run C but thereafter remained unchanged with increasing acetyl chloride concentration.

The titration values were higher than those obtained by sulfur analysis. This is believed due to the retention of some water insoluble acetyl chloride, but no more than about 5 mmoles. Each mole of acetyl chloride consumes two moles of NaOH during titration.

In Runs F, J, N, and R, 0.5, 1.0, 2.0 and 3.0 ml. of water was added deliberately to the cement prior to sulfonation with the amount of acetyl chloride used in Control Run B. A dramatic reduction in acid value and sulfur content resulted just as described in Comparative Example 2 and Example I.

TABLE IV

| Run | A | B | C | D | E | F | G | H | I | J | K |
|---|---|---|---|---|---|---|---|---|---|---|---|
| Water Added, ml. | 0 | 0 | 0 | 0 | 0 | 0.5 | 0.5 | 0.5 | 0.5 | 1.0 | 1.0 |
| Mmoles | — | — | — | — | — | 27.8 | 27.8 | 27.8 | 27.8 | 55.5 | 55.5 |
| Acetyl Chloride, ml. | 2.84 | 4.26 | 5.33 | 7.10 | 8.88 | 4.26 | 6.25 | 8.03 | 9.80 | 4.26 | 8.24 |
| Weight, g. | 3.14 | 4.71 | 5.89 | 7.85 | 9.81 | 4.71 | 6.91 | 8.87 | 10.8 | 4.71 | 9.11 |
| Mmoles | 47 | 60 | 75 | 100 | 125 | 60 | 88 | 113 | 138 | 60 | 116 |
| $CH_3COCl/H_2SO_4$ | 1.25 | 1.6 | 2.0 | 2.67 | 3.33 | 1.6 | 2.35 | 3.01 | 3.68 | 1.6 | 3.09 |
| $SO_3H$ Titration, meq/100 g | 34.6 | 41.4 | 26.0 | 39.8 | 47.2 | 36.6 | 50.6 | 48.8 | 47.4 | 12.2 | 40.6 |
| Wt. % Sulfur | 0.865 | 1.035 | 1.10 | 1.07 | 1.105 | 0.735 | 1.085 | 1.055 | 1.015 | 0.11 | 1.045 |
| $SO_3H$, meq/100 g | 27.0 | 32.3 | 34.4 | 33.4 | 34.5 | 23.0 | 33.9 | 33.0 | 31.7 | 3.4 | 32.7 |
| $H_2SO_4$ Conversion, % | 74 | 88 | 94 | 92 | 95 | 62 | 93 | 90 | 85 | 9 | 90 |

| Run | L | M | N | O | P | Q | R | S | T | U |
|---|---|---|---|---|---|---|---|---|---|---|
| Water Added, ml. | 1.0 | 1.0 | 2.0 | 2.0 | 2.0 | 2.0 | 3.0 | 3.0 | 3.0 | 3.0 |
| Mmoles | 55.5 | 55.5 | 111 | 111 | 111 | 111 | 167 | 167 | 167 | 167 |
| Acetyl Chloride, ml. | 10.02 | 11.79 | 4.26 | 12.14 | 13.92 | 15.70 | 4.26 | 16.13 | 17.90 | 19.68 |
| Weight, g. | 11.07 | 13.03 | 4.71 | 13.42 | 15.39 | 17.35 | 4.71 | 17.82 | 19.78 | 21.74 |
| Mmoles | 141 | 166 | 60 | 171 | 196 | 221 | 60 | 227 | 252 | 277 |
| $CH_3COCl/H_2SO_4$ | 3.76 | 4.43 | 1.6 | 4.56 | 5.23 | 5.89 | 1.6 | 6.05 | 6.72 | 7.39 |
| $SO_3H$ Titration, meq/100 g | 41.8 | 41.4 | 4.8 | 42.8 | 45.6 | 40.2 | 4.0 | 38.6 | 44.2 | 48.6 |
| Wt. % Sulfur | 1.015 | 1.025 | 0.085 | 0.975 | 1.035 | 1.01 | 0.065 | 0.98 | 0.92 | 0.99 |
| $SO_3H$, meq/100 g | 31.7 | 32.0 | 2.7 | 30.5 | 32.3 | 31.6 | 2.0 | 30.6 | 28.8 | 30.9 |
| $H_2SO_4$ Conversion, % | 87 | 88 | 7 | 83 | 88 | 86 | 5 | 84 | 79 | 84 |

In the remaining runs, acetyl chloride was added to those systems to which had been added water. The amount of acetyl chloride added was equal to and in excess of the amount of water that had been added. The results in Table IV show that excess acetyl chloride improves sulfonation and conversion of reagent to sulfonic acid is again at least as good as that of the control. In Runs G, K, O and S, and amount of acetyl chloride equal to the amount of added water was added. Conversions of sulfuric acid to sulfonic acid were 93%, 90%, 83% and 84%. The addition of 25 mmoles and 50 mmoles acetyl chloride in excess of the added water gave identical results.

Comparative Example 3

In 1000 ml. of Exxon hexane was dissolved 100 g of a 20 Mooney EPDM of the same description as that used in Comparative Example 2. Two such cements were prepared.

Into one cement at room temperature was dripped in 2.48 ml. (37.5 mmoles) of chlorosulfonic acid. Gel formation was immediate, and at the end of the chlorosulfonic addition a gelled mass had wrapped around the stirrer.

Into the second cement at room temperature was first charged 3.52 ml. (37.5 mmoles) of acetic anhydride. Then 2.48 ml. chlorosulfonic acid was dripped in. The results were identical to that encountered with the first cement in the absence of acetic anhydride.

These examples show that chlorosulfonic acid is much too reactive in the sulfonation of unsaturated polymers. In addition, its rate of reaction with acetic anhydride to produce the mild acetyl sulfate sulfonation reagent is slower than its rate of reaction with unsaturated polymer.

Example III

Acetyl sulfate sulfonation reagent was generated from chlorosulfonic acid as follows: 31.0 ml. (0.33 mole) of acetic anhydride was cooled to below 0°C. Chlorosulfonic acid (19.9 ml., 0.30 mole) was added slowly. After all the chlorosulfonic acid was added, the thick homogeneous reagent was permitted to warm to 10°C. The reagent was 5.90 Molar in acetyl sulfate.

A 20 Mooney hexane cement was prepared as described in Comparative Example 3. To the cement was added at room temperature 6.34 ml. of the 5.90 Molar acetyl sulfate (37.5 mmoles) described above. No gel formed and a homogeneous sulfonation cement was obtained. After 30 minutes, the sulfonation cement was inactivated with 150 ml. of isopropanol. The free acid of the polymer was isolated and dried as described in Example I.

Titration showed the sulfonated polymer to contain 31.2 meq. of free acid. Dietert sulfur analysis showed the polymer to contain 0.84 weight percent sulfur which is equivalent to 26.3 meq. $SO_3H$ per 100 g of sulfonated polymer.

Example IV

Nineteen separate runs were made to determine the effects of water on the sulfonation of EPDM with the performed acetyl sulfate derived from chlorosulfonic acid and acetic anhydride and the effects of the addition of acetic anhydride and acetyl chloride on the sulfonation of the wet cement. These runs and the results therefrom are detailed in Table V.

TABLE V

| Run | A | B | C | D | E | F | G | H | I | J |
|---|---|---|---|---|---|---|---|---|---|---|
| Water added, ml. | 0 | 0 | 0 | 0 | 0 | 0 | 0 | 0.5 | 1.0 | 2.0 |
| Mmoles | 0 | 0 | 0 | 0 | 0 | 0 | 0 | 27.8 | 55.5 | 111 |
| $(CH_3C(=O))_2O$, ml. | – | 1.76 | 3.52 | 7.05 | – | – | – | – | – | – |
| Weight, g | – | 1.91 | 3.83 | 7.66 | – | – | – | – | – | – |
| Mmoles | – | 18.75 | 37.5 | 75.00 | – | – | – | – | – | – |
| $CH_3COCl$, ml. | – | – | – | – | 1.33 | 2.66 | 5.33 | – | – | – |
| Weight, g | – | – | – | – | 1.47 | 2.94 | 5.89 | – | – | – |
| Mmoles | – | – | – | – | 18.75 | 37.5 | 75.00 | – | – | – |
| $SO_3H$ Titration, meq./100 g | 43.4 | 34.0 | 33.8 | 39.2 | 34.4 | 32.2 | 33.2 | 32.0 | 9.8 | 8.4 |
| Wt. %, Sulfur | 1.135 | 0.925 | 0.915 | 1.05 | 0.885 | 0.905 | 0.85 | 0.90 | 0.24 | 0.15 |
| $SO_3H$, meq., 100 g | 35.5 | 28.9 | 28.6 | 32.8 | 27.7 | 28.3 | 26.6 | 28.1 | 7.5 | 4.7 |
| Conversion of Acetyl Sulfate, % | 97 | 79 | 78 | 90 | 76 | 77 | 72 | 77 | 20 | 13 |

TABLE V (Continued)

| Run | K | L | M | N | O | P | Q | R | S |
|---|---|---|---|---|---|---|---|---|---|
| Water Added, ml. | 3.0 | 0.5 | 1.0 | 2.0 | 3.0 | 0.5 | 1.0 | 2.0 | 3.0 |
| Mmoles | 167 | 27.8 | 55.5 | 111 | 167 | 27.8 | 55.5 | 111 | 167 |
| $(CH_3\underset{\underset{O}{\parallel}}{C})_2O$, ml. | – | 2.82 | 5.64 | 11.23 | 16.91 | – | – | – | – |
| Weight, g | – | 3.06 | 6.13 | 12.25 | 18.38 | – | – | – | – |
| Mmoles | – | 30 | 60 | 120 | 180 | – | – | – | – |
| $CH_3COCl$, ml. | – | – | – | – | – | 2.13 | 4.26 | 6.39 | 8.52 |
| Weight, g | – | – | – | – | – | 2.36 | 4.71 | 7.07 | 9.42 |
| Mmoles | – | – | – | – | – | 30 | 60 | 90 | 120 |
| $SO_3H$, Titration, meq./100 g | 8.2 | 23.6 | 32.0 | 36.4 | 32.2 | 36.6 | 33.8 | 34.2 | 21.6 |
| Wt. %, Sulfur | 0.165 | 0.72 | 0.875 | 0.985 | 0.89 | 0.845 | 0.875 | 0.815 | 0.22 |
| $SO_3H$, meq., 100 g | 5.2 | 22.5 | 27.3 | 30.8 | 27.8 | 26.4 | 27.3 | 25.5 | 6.9 |
| Conversion of Acetyl Sulfate, % | 14 | 61 | 74 | 84 | 76 | 72 | 74 | 69 | 19 |

In 1000 ml. of Exxon hexane was dissolved 100 g of a 20 Mooney EPDM used in Comparative Example 2 and III. The desired amount of water (if any) was added. Then the desired amount of acetic anhydride (if any) or acetyl chloride (if any) was added. To the cement was added 6.34 ml. of 5.90 Molar acetyl sulfate (37.5 mmoles) derived from chlorosulfonic acid and acetic anhydride as described in Example III. After 30 minutes the sulfonation cement was inactivated with 150 ml. of isopropanol, and the free acid was worked up and dried as described in Example I.

The control (Run A) gave a very high reagent conversion (97%). A possible reason for the very high conversion is that the reagent contains acetyl chloride and some acetic anhydride from the generation of the reagent from acetic anhydride and chlorosulfonic acid, and so water effects are negligible. When additional acetic anhydride (Runs, B, C, D) or acetyl chloride (Runs E, F, G) was added to the cement reagent conversions remained high. When 0.5 ml. of water was added (Run H) reagent conversion remained high (77%) which is due primarily to the acetyl chloride present as a result of reagent generation. However, when 1.0, 2.0, and 3.0 ml. of water was added (Runs I, J, K) reagent conversion dropped to 20% and below.

In the remaining runs, acetic anhydride (Runs L, M, N, O) and acetyl chloride (Runs P, Q, R, S) were added to the cements containing water. In general, reagent conversions were increased to above 70% although Run L (61%) and Runs S (19%) gave lower than expected conversions.

Comparative Example 4

A 1.0 molar solution of a 1/1 $SO_3$/triethyl phosphate (TEP) complex in 1,2-dichloroethane (DCE) was prepared by adding 80.1 g of liquid $SO_3$ (1.0 mole) to a solution of 182.2 g (1.0 mole) of TEP in 797 ml. of DCE.

Four cements were prepared as follows: into 1000 ml. of Exxon hexane was dissolved 100 g of an ethylene-propylene-5-ethylidene-2-norbornene copolymer Vistalon 2504—20. The copolymer contained about 50 wt. % ethylene and about 5 wt. % 5-ethylidene-2-norbornene. It possessed a Mooney viscosity (ML, 1 + 8, 212°F.) of about 20. This polymer was produced through the hot extrusion breakdown of commercial 40 Mooney Vistalon 2504 and additionally had been dried on a rubber mill so that little water was contained in the polymer.

Into three of the cements was added 0.5 ml., 1.0 ml., and 2.0 ml. of water. Then into each cement at room temperature was added 37.5 ml. of the 1.0 molar $SO_3$/TEP complex (37.5 mmoles). The cements were stirred for 30 minutes at room temperature and then inactivated with 150 ml. of isopropanol. Antioxidant 2246 (0.5 g) was added, and the acid form of the sulfonated polymer was isolated by steam stripping. The polymer was pulverized and water-washed in a Waring blender, and the wet crumb was dewatered and dried at about 120°F. on a two-roll rubber mill.

Five grams of the sulfonated polymer was dissolved in 100 ml. of 95 toluene-5-methanol, and the solution was titrated with 0.1 N ethanolic NaOH to an Alizarin Thymophthalein end-point. Dietert sulfur determinations were made on each sulfonated polymer. The results are shown in Table VI.

Even without the addition of water to the cement, the conversion of the $SO_3$/TEP complex was already very low (23%). The addition of water further reduced the sulfur level and further lowered reagent conversion.

This example illustrates the deleterious effects of water on the $SO_3$/TEP complex.

TABLE VI

$SO_3$-TRIETHYL PHOSPHATE (1/1) COMPLEXES

| Run | IA | IB | IC | ID | IIA | IIB | IIC | IID | IIIA |
|---|---|---|---|---|---|---|---|---|---|
| $H_2O$ Scavenger | none | none | none | none | $Ac_2O$ | $Ac_2O$ | $Ac_2O$ | $Ac_2O$ | $Ac_2O$ |
| Weight, g. | — | — | — | — | 3.57 | 6.43 | 9.29 | 14.91 | 5.72 |
| Volume, Ml. | — | — | — | — | 3.29 | 5.92 | 8.55 | 13.71 | 5.26 |
| Mmoles | — | — | — | — | 35 | 63 | 91 | 146 | 56 |
| Mode of Addition | — | — | — | — | Cement | Cement | Cement | Cement | Cement |
| Water Added, Ml. | 0 | 0.5 | 1.0 | 2.0 | 0 | 0.5 | 1.0 | 2.0 | 0 |
| Mmoles | 0 | 27.8 | 55.5 | 111 | 0 | 27.8 | 55.5 | 111 | 0 |
| $SO_3H$ Content, meq./100 g. | 13.6 | 12.4 | 7.8 | 10.4 | 34.6 | 34.6 | 35.4 | 35.8 | 33.8 |
| By Titration | 8.4 | 9.1 | 6.3 | 6.7 | 34.5 | 34.2 | 35.3 | 28.9 | 32.7 |
| By Sulfur Analysis | 23 | 24 | 17 | 18 | 95 | 94 | 97 | 79 | 90 |
| Conversion, % | | | | | | | | | |

| Run | IIIB | IIIC | IVA | IVB | IVC | IVD | VA | VB |
|---|---|---|---|---|---|---|---|---|
| $H_2O$ Scavenger | $Ac_2O$ | $Ac_2O$ | AcCl | AcCl | AcCl | AcCl | AcCl | AcCl |
| Weight, g. | 6.43 | 14.91 | 2.75 | 4.95 | 7.14 | 11.46 | 4.40 | 7.14 |
| Volume, Ml. | 5.92 | 13.71 | 2.49 | 4.48 | 6.46 | 10.37 | 3.98 | 6.46 |
| Mmoles | 63 | 146 | 35 | 63 | 91 | 146 | 56 | 91 |
| Mode of Addition | Premix | Premix | Cement | Cement | Cement | Cement | Premix | Premix |
| Water Added, Ml. | 0.5 | 2.0 | 0 | 0.5 | 1.0 | 2.0 | 0 | 1.0 |
| Mmoles | 27.8 | 111 | 0 | 27.8 | 55.5 | 111 | 0 | 55.5 |
| $SO_3H$ Content, meq./100 g. | | | | | | | | |
| By Titration | 34.4 | 35.0 | 29.6 | 33.8 | 33.8 | 32.8 | 32.0 | 33.8 |
| By Sulfur Analysis | 34.4 | 37.0 | 29.5 | 30.2 | 33.4 | — | 29.2 | 30.2 |
| Conversion, % | 94 | 102 | 82 | 83 | 92 | — | 80 | 83 |

$Ac_2O$ = acetic anhydride and AcCl = acetyl chloride.

Example V

Four sulfonations were effected with the $SO_3$/TEP complex and the EPDM cement as described in Comparative Example 4. In all cases, acetic anhydride was added to the cement prior to the addition of the sulfonation reagent. Into three of the cements was added 0.5, 1.0, and 2.0 ml. of water followed by an amount of acetic anhydride equal to 35 mmoles plus the number of mmoles of water added. To each cement was added 37.5 ml. of the 1.0 M $SO_3$/TEP complex described in Comparative Example 4. The cements were stirred for 30 minutes at room temperature and then inactivated with 150 ml. isopropanol. The sulfonated polymers were worked up and analyzed as described in Comparative Example 4. Results are shown in Table VI.

When sulfonation was effected in the absence of acetic anhydride (Control Run I—A) a reagent conversion of only 23% was obtained. However, when 35 mmoles of acetic anhydride was added to the cement (Run II—A) conversion of the sulfonation complex increased markedly to 95%. When water had been added to the cement and the cement treated with sufficient acetic anhydride (Runs II—B, II—C, II—D) the conversion of the reagent still remained high (94%, 97%, 79%, respectively).

This example dramatically illustrates the beneficial effect of the addition of acetic anhydride added to wet polymer cements on the conversion of $SO_3$/TEP sulfonation complexes to polymeric sulfonic acid.

Example VI

Three sulfonations were effected with the cement described in Comparative Example 4. In two instances, 0.5 ml. and 2.0 ml. of water was added to the cement. Then 37.5 ml. of 1.0 M $SO_3$/TEP in DCE solution (37.5 mmoles) was premixed with various amounts of acetic anhydride and then the solution was added directly to the cement. The cement was stirred for 30 minutes at room temperature and then inactivated with 150 ml. of isopropanol. The sulfonated polymers were worked up and analyzed as described in Comparative Example 4. Results are shown in Table VI.

The control (Run I—A) wherein no acetic anhydride was used gave a reagent conversion of only 23%. However, when the reagent was premixed with 56 mmoles of acetic anhydride and then added to the cement, a dramatic increase of reagent conversion to 90% was obtained. Similarly, when water had been added to the cement (Runs III—B, III—C) the premixing of the reagent with sufficient acetic anhydride to counteract the water again maintained a high reagent conversion.

This example shows that the sulfonation of wet cements with $SO_3$/TEP complexes can be accomplished with high reagent conversion through the premixing of the reagent with sufficient acetic anhydride to counterbalance all of the water present in the cement.

Example VII

The four runs described in Example V were repeated with the exception that the acetic anhydride was replaced with equimolar amounts of acetyl chloride. The results are shown in Table VI.

The addition of 35 mmoles of acetyl chloride to the cement prior to the addition of the $SO_3$/TEP sulfonation reagent increased the reagent conversion from 23% (Control, Run I—A) to 82%. When water was added to the cements (Runs IV—B, IV—C, IV—D) but sufficient acetyl chloride added to counteract the water reagent conversions remained high.

This example illustrates the beneficial effects upon reagent conversion achieved through the addition of acetyl chloride to wet polymer cements in the sulfonation of EPDM with $SO_3$/TEP complexes.

Example VIII

Two sulfonations were effected as described in Comparative Example 4. In one instance (Run V—B) 1.0 ml. of water was added to the cement. Then 37.5 ml. of 1.0 M $SO_3$/TEP in DCE solution was premixed with 56 mmoles (Run V—A) and 91 mmoles (Run V—B) of acetyl chloride. The solutions were added directly to the cements. The cement was stirred for 30 minutes at room temperature and then inactivated with 150 ml. isopropanol. The sulfonated polymers were worked up and analyzed as described in Comparative Example 4. The results are shown in Table VI.

Premixing acetyl chloride with the reagent increased the reagent conversion from 23% (control, Run I—A) to 80%. Reagent conversion remained high even when 1 weight % water was present.

This example demonstrates the sulfonation of wet cements with $SO_3$/TEP complexes to high reagent conversion through the premixing of the reagent with amounts of acetyl chloride sufficient to counteract all of the water in the sulfonation system.

Comparative Example 5

Four EPDM cements were prepared as described in Comparative Example 4. Into 3 of the cements was added 0.5 ml., 1.0 ml. and 2.0 ml of water (Runs VI—B, VI—C, VI—D). Then into each cement was added 75.0 ml. of 0.5 molar 1/1 $SO_3$/p-dioxane in DCE (37.5 mmoles). The cements were stirred for 30 minutes at room temperature and then inactivated with 150 ml. isopropanol. The polymers were worked up and analyzed as described in Comparative Example 4. The results are shown in Table VII.

TABLE VII

0.5 MOLAR $SO_3$-DIOXANE (1/1) COMPLEX [a]

| Run | VIA | VIB | VIC | VID | VIIA | VIIB | VIIC | VIID |
|---|---|---|---|---|---|---|---|---|
| $H_2O$ Scavenger | none | none | none | none | $Ac_2O$ | $Ac_2O$ | $Ac_2O$ | $Ac_2O$ |
| Weight, g. | – | – | – | – | 3.57 | 6.43 | 9.29 | 14.91 |
| Volume, Ml. | – | – | – | – | 3.29 | 5.92 | 8.55 | 13.71 |
| Mmoles | – | – | – | – | 35 | 63 | 91 | 146 |
| Water Added, Ml. | 0 | 0.5 | 1.0 | 2.0 | 0 | 0.5 | 1.0 | 2.0 |
| Mmoles | 0 | 27.8 | 55.5 | 111 | 0 | 27.8 | 55.5 | 111 |
| $SO_3H$ Content, meq./100 g. | | | | | | | | |
| By Titration | 29.0 | 23.0 | 22.0 | 18.4 | 32.8 | 33.6 | 35.2 | 32.8 |
| By Sulfur Analysis | 26.1 | 19.2 | 17.3 | 15.0 | 32.7 | 33.1 | 32.7 | 33.1 |
| Conversion, % | 71 | 51 | 47 | 40 | 90 | 91 | 90 | 91 |

(a) 75.0 ml of 0.5 m reagent (37.5 mmoles of reagent) used per run (100 g. EPDM)

In the absence of any added water, a respectable conversion of 71% was obtained. The addition of water dropped the conversions to 51%, 47% and 40% as the water added to the cement increased 0.5%, 1.0% and 2.0%, respectively.

This example illustrates the deleterious effects of water upon the sulfonation of EPDM with $SO_3$/dioxane complexes.

Example IX

The four runs in Comparative Example 5 were repeated except that to each cement was added an amount of acetic anhydride equal to 35 mmoles plus the number of mmoles of water added. The results are shown in Table VII. In all cases, the reagent conversion was 90% or greater.

This example demonstrates the sulfonation of wet cements with $SO_3$/dioxane complexes to high reagent conversions through the addition of acetic anhydride to the cement.

Example X

Four cements were prepared from Exxon hexane and the EPDM described in Comparative Example 2 at a concentration of 100g/liter. Various amounts of acetyl chloride were added to the cements. Concentrated sulfuric acid (2.10 ml. = 37.5 mmoles $H_2SO_4$ was dripped in at room temperature, and the mixture was stirred for 30 minutes. Reaction was terminated with 100 ml. methanol, and 0.5 g Antioxidant 2246 was added. The polymers were worked up and analyzed as described in Comparative Example 2. Results are given in Table VIII.

Very high conversions of sulfuric acid (acetyl sulfate) are obtained when hexane solvent is used for the sulfonation of EPDM with in situ reagent derived from concentrated sulfuric acid and acetyl chloride.

TABLE VIII

| Run | A | B | C | D |
|---|---|---|---|---|
| Acetyl Chloride, ml. | 4.26 | 5.33 | 7.10 | 8.88 |
| Weight, g. | 4.71 | 5.89 | 7.85 | 9.81 |
| Mmoles | 60 | 75 | 100 | 125 |
| Concentrated $H_2SO_4$, ml. | 2.10 | 2.10 | 2.10 | 2.10 |
| Mmoles | 37.5 | 37.5 | 37.5 | 37.5 |
| $CH_3COCl/H_2SO_4$ | 1.6 | 2.0 | 2.67 | 3.33 |
| Weight %, Sulfur | 1.035 | 1.10 | 1.07 | 1.105 |
| $SO_3H$ Content, meq./100 g | 32.3 | 34.4 | 33.4 | 34.5 |
| Reagent conversion, % | 88 | 94 | 92 | 95 |

Comparative Example 6

To 2000 ml. of 1,2-dichloroethane was added 100 g. of commercial Vistalon 2504. Solution of the polymer did not occur after extended agitation at about 50°C. Apparently 1,2-dichloroethane is too polar a solvent for the non-polar EPDM. This solvent is not suitable for EPDM sulfonation.

Example XI

Two cements were prepared by dissolving 100 g. of the EPDM described in Comparative Example 2 in 1000 ml. of cyclohexane. To the cements were added 60.75 and 86.25 mmoles of acetic anhydride. At room temperature was added 37.5 mmoles of concentrated sulfuric acid, and the sulfonation mixture was stirred for 30 minutes. Sulfonation was terminated through the addition of 150 ml. isopropanol, and 0.5 g. of Antioxidant 2246 was added. The polymeric acid was isolated, dried, and titrated as described in Comparative Example 1. Results are given in Table IX (Runs A and B).

The results show that excellent conversions of in situ acetyl sulfate to sulfonic acid are obtained in the sulfonation of EPDM in cyclohexane solvent. Cyclohexane is an excellent solvent for the sulfonation of EPDM.

Comparative Example 7

Example XI was repeated except that tetrahydrofuran was used as the solvent. The results are given in Table IX (Runs C and D). At both acetic anhydride/$H_2SO_4$ ratios of 1.62 and 2.30 the reagent conversions were extremely low. It is apparent that tetrahydrofuran is either reactive with acetyl sulfate and other sulfonation reagents or inhibits sulfonation to such an extent that it thereby cannot be considered a suitable solvent for sulfonation.

Comparative Example 8

To 1000 ml. of amyl acetate (AA) was added 100 g. of the EPDM described in Comparative Example 2. No solution occurred after extending heating and vigorous agitation. This ester and the more polar lower molecular weight esters are thereby unsuitable as the sole solvents in the sulfonation of EPDM.

Comparative Example 9

In view of the incompatibility of EPDM in amylacetate two cements were prepared by dissolving 100 g. of the EPDM of Comparative Example 2 in 500 ml. of Exxon hexane and 500 ml. of amyl acetate. Two sulfonations were effected as described in Example XI. The results are given in Table IX (Runs F and G).

Conversions of the in situ aceyl sulfate were 22% and 36% at acetic anhydride/$H_2SO_4$ ratios of 1.62 and 2.30, respectively. The amyl acetate is either reactive with acetyl sulfate or inhibits sulfonation to such an extent that it cannot be considered a suitable sulfonation solvent.

The improved process as embodied in the aforementioned examples, for the preparation of a gel-free neutralized sulfonated elastomeric polymer, clearly defines a method of obtaining at least 70% conversions which was not previously obtainable.

## TABLE IX

| Run | A | B | C | D | E | F | G |
|---|---|---|---|---|---|---|---|
| Solvent | Cyc $C_6$ | Cyc $C_6$ | THF | THF | — | Hexane | Hexane |
| Volume, ml. | 1000 | 1000 | 1000 | 1000 | — | 1000 | 1000 |
| Cosolvent | — | — | — | — | AA | AA | AA |
| Volume, ml. | — | — | — | — | 1000 | 500 | 500 |
| Acetic Anhydride | | | | | | | |
| Volume, ml. | 5.74 | 8.15 | 5.74 | 8.15 | INSOLUBLE | 5.74 | 8.15 |
| Mmoles | 60.8 | 86.3 | 60.8 | 86.3 | | 60.8 | 86.3 |
| Concentrated $H_2SO_4$ | | | | | | | |
| Volume, ml. | 2.10 | 2.10 | 2.10 | 2.10 | | 2.10 | 2.10 |
| Mmoles $H_2SO_4$ | 37.5 | 37.5 | 37.5 | 37.5 | | 37.5 | 37.5 |
| Acetic Anhydride /$H_2SO_4$ | 1.62 | 2.30 | 1.62 | 2.30 | | 1.62 | 2 30 |
| $SO_3H$ Content (Titration) | 32.9 | 32.3 | 5.6 | 5.4 | | 8.2 | 13.4 |
| Conversion, % | 90 | 88 | 15 | 14 | | 22 | 36 |

Cyc = cyclohexane
THF = tetrahydrofuran
Hex = hexane
AA = amyl acetate

## Claims

1. A process for the sulphonation of an unsaturated elastomeric polymer to form a sulphonated elastomeric polymer, in which a cement of said unsaturated elastomeric polymer having 0.1 to 5.0 mole % olefinic unsaturation and having a water conent of more than 0.2 wt.% dissolved in a non-reactive solvent at a concentration of 2 to 25 wt. % is contacted with a sulphonating agent in a reaction zone at −100°C to +100°C for a time sufficient to result in the formation of a sulphonated elastomeric polymer having 15 to 50 meq. of sulphonate groups per 100 grams of said sulphonated elastomeric polymer whereby at least 70% of the amount of sulphonating agent is converted to sulphonate groups on the polymer, wherein the sulphonating agent comprises a mixture of

(a) either $RCO_2SO_3H$ or a complex derived from complexing a sulphur trioxide donor with a Lewis base containing oxygen, phosphorus or sulphur; and

(b) a second reagent which is $(RCO)_2O$, RCOX or a mixture thereof, provided the molar ratio of said second reagent to said $RCO_2SO_3H$ or said complex is at least one and provided the second reagent is derived from a carboxylic acid having a solubility of 25°C of at least 0.2 g/100 ml water, wherein R is $CH_3$—, $C_2H_5$—, $C_3H_7$, $C_4H_9$—, $C_5H_{11}$—, $C_6H_{13}$— or $C_6H_5CH_2$— or a mixture thereof and X is F, Cl, Br, or I.

2. A process according to claim 1, wherein such sulphonating agent is formed prior to addition to said cement.

3. A process according to claim 1, wherein such sulphonating agent is formed *in situ* in said cement.

4. A process according to any one of the preceding claims, wherein said elastomeric polymer is neoprene.

5. A process according to any one of claims 1 to 3, wherein said elastomeric polymer is Butyl rubber, styrene-butadiene copolymer, an isoprene-styrene copolymer or an EPDM terpolymer.

6. A process according to any one of the preceding claims, wherein said acid form of said sulphonated elastomeric polymer has 20 to 40 meq. sulphonate groups per 100 grams of said sulphonated elastomeric polymer.

7. A process according to any one of the preceding claims, which includes neutralising at least 95% of said sulphonate groups with a neutralizing agent having an ammonium, aluminium, lead or a metal of Groups I—A, II—A, I—B, or II—B of the Periodic Table of Elements cation or a mixture thereof.

8. A process according to claim 7, which includes adding a preferential plasticizer at a concentration level of 3 parts to 60 parts by weight per 100 parts by weight of said neutralised sulphonated elastomeric polymer.

9. A process according to either of claims 7 and 8, which includes adding an additive other than a preferential plasticizer to said neutralised sulphonated elastomeric polymer at a concentration level of less than 300 parts by weight per 100 parts by weight of said neutralized sulphonated elastomeric polymer.

10. A process according to claim 9, wherein said additive is an oil, a filler, a wax, a pigment, a stabilizer or a mixture thereof.

11. A process according to any one of the preceding claims, wherein such sulphonating agent is formed from a mixture of said $(RCO)_2O$ and said complex.

12. A process according to any one of claims 1 to 10, wherein said sulphonating agent is formed from a mixture of said $(RCO)_2O$, RCOCl, and said complex.

13. A process according to any one of claims 1 to 10, wherein said sulphonating agent is formed from a mixture of RCOCl and said complex.

14. A process according to any one of claims 1 to 10, wherein such sulphonating agent is formed from a mixture of said $(RCO)_2O$ and concentrated $H_2SO_4$.

15. A process according to any one of claims 1 to 10, wherein said sulphonating agent is formed from a mixture of said $(RCO)_2O$, $RCO_2H$, and $SO_3$.

16. A process according to any one of claims 1, 2, and 4 to 10, wherein said sulphonating agent is formed from a mixture of said $(RCO)_2O$, and $ClSO_3H$.

17. A process according to any one of claims 1 to 10, wherein such sulphonating agent is formed from a mixture of RCOCl and $H_2SO_4$.

18. A process according to any one of claims 1 to 10, wherein said sulphonating agent is a mixture of RCOX, $(RCO)_2O$ and $ClSO_3H$.

19. A process according to any one of claims 1 to 10, wherein said sulphonating agent is formed from a mixture of $(RCO)_2O$, $RCO_2M$ and $ClSO_3H$, wherein M is lithium, sodium, potassium, cesium or a mixture thereof.

20. A process according to any one of claims 1 to 10, wherein said non-reactive solvent for the mixture of said complex and $(RCO)_2O$ or RCOX is an aliphatic hydrocarbon, a chlorinated aliphatic hydrocarbon, an aromatic hydrocarbon, a chlorinated aromatic hydrocarbon or a mixture thereof.

21. A process according to any of claims 1 to 10, wherein said non-reactive solvent for the mixture of $RCO_2SO_3H$ and $(RCO)_2O$ or RCOX is an aliphatic or cycloaliphatic saturated carbon-hydrogen compound having from 4 to 7 carbon atoms per molecule.

**Revendications**

1. Procédé de sulfonation d'un polymère élastomérique insaturé pour former un polymère élastomérique sulfoné, dans lequel une solution dudit polymère élastomérique insaturé ayant 0,1 à 5,0 moles % d'insaturation oléfinique et une teneur en eau de plus de 0,2% en poids, dans un solvant non réactif à une concentration de 2 à 25% en poids, est mise en contact avec un agent de sulfonation dans une zone de réaction à une température de −100°C à +100°C pendant une période suffisante pour entraîner la formation d'un polymère élastomérique sulfoné ayant 15 à 50 milli-équivalents de groupes sulfonate par 100 g de polymère élastomérique sulfoné, ce qui a pour effet qu'au moins 70% de la quantité d'agent de sulfonation sont transformés en groupes sulfonate sur le polymère, caractérisé en ce que l'agent de sulfonation consiste en un mélange:

(a) d'un composé $RCO_2SO_3H$ ou d'un complexe obtenu par complexation d'un donneur d'anhydride sulfurique avec une base de Lewis contenant de l'oxygène, du phosphore ou du soufre; et

(b) d'un second réactif qui répond à la formule $(RCO)_2O$, à la formule RCOX ou un mélange des deux, à condition que le rapport molaire du second réactif au composé $RCO_2SO_3H$ ou audit complexe soit au moins égal à un et que le second réactif soit dérivé d'un acide carboxylique ayant une solubilité à 25°C d'au moins 0,2 g/100 ml d'eau, R étant un groupe $CH_3$—, $C_2H_5$—, $C_3H_7$—, $C_4H_9$—, $C_5H_{11}$—, $C_6H_{13}$— ou $C_6H_5CH_2$— ou un mélange de ces groupes et X représentant F, Cl, Br ou I.

2. Procédé suivant la revendication 1, caractérisé en ce que l'agent de sulfonation est formé avant l'addition de ladite solution.

3. Procédé suivant la revendication 1, caractérisé en ce que l'agent de sulfonation est formé in situ dans ladite solution.

4. Procédé suivant l'une quelconque des revendications précédentes, caractérisé en ce que le polymère élastomérique est le néoprène.

5. Procédé suivant l'une quelconque des revendications 1 à 3, caractérisé en ce que le polymère élastomérique est un butyl-caoutchouc, un copolymère styrène-butadiène, un copolymère isoprène-styrène ou un terpolymère EPDM.

6. Procédé suivant l'une quelconque des revendications précédentes, caractérisé en ce que la forme acide dudit polymère élastomérique sulfoné porte 20 à 40 milliéquivalents de groupes sulfonate par 100 g de polymère élastomérique sulfonè.

7. Procédé suivant l'une quelconque des revendications précédentes, caractérisé en ce qu'il implique la neutralisation d'au moins 95% des groupes sulfonate avec un agent neutralisant portant un cation ammonium, aluminium, plomb ou métal des Groupes IA, IIA, IB ou IIB du Tableau Périodique des Eléments ou un mélange de ces cations.

8. Procédé suivant la revendication 7, caractérisé en ce qu'il implique l'addition d'un plastifiant préférentiel à une niveau de concentration de 3 à 60 parties en poids pour 100 parties en poids dudit polymère élastomérique sulfoné neutralisé.

9. Procédé suivant l'une des revendications 7 et 8, caractérisé en ce qu'il implique l'addition d'un additif autre qu'un plastifiant préférentiel audit polymère élastomérique sulfoné neutralisé à un niveau de concentration de moins de 300 parties en poids pour 100 parties en poids dudit polymère élastomérique sulfoné neutralisé.

10. Procédé suivant la revendication 9, caractérisé en ce que l'additif est une huile, une charge, une cire, un pigment, un agent stabilisant ou un de leurs mélanges.

11. Procédé suivant l'une quelconque des revendications précédentes, caractérisé en ce que l'agent de sulfonation est formé à partir d'un mélange du composé $(RCO)_2O$ et dudit complexe.

12. Procédé suivant l'une quelconque des revendications 1 à 10, caractérisé en ce que l'agent de sulfonation est formé à partir d'un mélange de $(RCO)_2O$, de RCOCl et dudit complexe.

13. Procédé suivant l'une quelconque des revendications 1 à 10, caractérise en ce que l'agent de sulfonation est formé à partir d'un mélange de RCOCl et dudit complexe.

14. Procédé suivant l'une quelconque des revendications 1 à 10, caractérisé en ce que l'agent de sulfonation est formé à partir d'un mélange de $(RCO)_2O$ et de $H_2SO_4$ concentré.

15. Procédé suivant l'une quelconque des revendications 1 à 10, caractérisé en ce que l'agent de sulfonation est formé à partir d'un mélange de $(RCO)_2O$, de $RCO_2H$ et de $SO_3$.

16. Procédé suivant l'une quelconque des revendications 1, 2 et 4 à 10, caractérisé en ce que l'agent de sulfonation est formé à partir d'un mélange de $(RCO)_2O$ et de $ClSO_3H$.

17. Procédé suivant l'une quelconque des revendications 1 à 10, caractérisé en ce que l'agent de sulfonation est formé à partir d'un mélange de RCOCl et de $H_2SO_4$.

18. Procédé selon l'une quelconque des revendications 1 à 10, caractérisé en ce que l'agent de sulfonation est un mélange de RCOX, $(RCO)_2O$ et $ClSO_3H$.

19. Procédé suivant l'une quelconque des revendications 1 à 10, caractérisé en ce que l'agent de sulfonation est formé à partir d'un mélange de $(RCO)_2O$, $RCO_2M$ et $ClSO_3H$, M désignant un métal tel que lithium, sodium, potassium ou césium, ou un mélange de ces métaux.

20. Procédé suivant l'une quelconque des revendications 1 à 10, caractérisé en ce que le solvant non réactif pour le mélange dudit complexe et de $(RCO)_2O$ ou RCOX est un hydrocarbure aliphatique,

un hydrocarbure aliphatique chloré, un hydrocarbure aromatique, un hydrocarbure aromatique chloré ou un mélange de ces composés.

21. Procédé suivant l'une quelconque des revendications 1 à 10, caractérisé en ce que le solvant non réactif pour le mélange de $RCO_2SO_3H$ et $(RCO)_2O$ ou RCOX est un composé de carbone et d'hydrogène saturé aliphatique ou cycloaliphatique ayant 4 à 7 atomes de carbone par molécule.

**Patentansprüche**

1. Verfahren zur Sulfonierung eines ungesättigten elastomeren Polymers zur Bildung eines sulfonierten elastomeren Polymers, bei dem ein Zement des ungesättigten elastomeren Polymers mit 0,1 bis 5,0 Mol.% olefinischer Ungesättigtheit und einem Wassergehalt von mehr als 0,2 Gew.% gelöst in einem nichtreaktiven Lösungsmittel in einer Konzentration von 2 bis 25 Gew.% mit einem Sulfonierungsmittel in einer Reaktionszone bei —100°C bis +100°C ausreichend lange kontaktiert wird, um ein sulfoniertes elastomeres Polymer mit 15 bis 50 Milliäquivalenten Sulfonatgruppen je 100 g des sulfonierten elastomeren Polymers zu bilden, wobei mindestens 70% des Sulfonierungsmittels in Sulfonatgruppen am Polymer umgewandelt werden, dadurch gekennzeichnet, daß das Sulfonierungsmittel eine Mischung aus

(a) entweder $RCO_2SO_3H$ oder einem Komplex erhalten durch Komplexieren eines Schwefeltrioxiddonors mit einer Sauerstoff, Phosphor oder Schwefel enthaltenden Lewis-Base und

(b) einem zweiten Reagenz, das $(RCO)_2O$, RCOX oder eine Mischung derselben ist, vorausgesetzt, daß das molare Verhältnis des zweiten Reagenzes zu $RCO_2SO_3H$ oder dem Komplex mindestens 1 ist, und vorausgesetzt, daß das zweite Reagenz von einer Carbonsäure mit einer Löslichkeit bei 25°C von mindestens 0,2 g/100 ml Wasser abgeleitet ist, wobei R $CH_3$—, $C_2H_5$—, $C_3H_7$—, $C_4H_9$—, $C_5H_{11}$—, $C_6H_{13}$— oder $C_6H_5CH_2$— oder eine Mischung derselben und X F, Cl, Br oder J sind,

umfaßt.

2. Verfahren nach Anspruch 1, dadurch gekennzeichnet, daß das Sulfonierungsmittel vor der Zugabe zu dem Zement gebildet wird.

3. Verfahren nach Anspruch 1, dadurch gekennzeichnet, daß das Sulfonierungsmittel *in situ* in dem Zement gebildet wird.

4. Verfahren nach jedem der vorangegangenen Ansprüche, dadurch gekennzeichnet, daß das elastomere Polymer Neopren ist.

5. Verfahren nach jedem der Ansprüche 1 bis 3, dadurch gekennzeichnet, daß das elastomere Polymer Butylgummi, Styrol/Butadien-Copolymer, ein Isopren/Styrol-Copolymer oder ein EPDM-Terpolymer ist.

6. Verfahren nach jedem der vorangegangenen Ansprüche, dadurch gekennzeichnewt, daß die Säureform des sulfonierten elastomeren Polymers 20 bis 40 Milliäquivalente Sulfonatgruppen je 100 g sulfoniertem elastomeren Polymer besitzt.

7. Verfahren nach jedem der vorangegangenen Ansprüche, dadurch gekennzeichnet, daß mindestens 95% der Sulfonatgruppen mit einem Neutralisierungsmittel neutralisiert werden, das ein Ammonium-, Aluminium-, Bleioder Metallkation der Gruppen IA, IIA, IB oder IIB des Periodensystems der Elemente oder eine Mischung derselben enthält.

8. Verfahren nach Anspruch 7, dadurch gekennzeichnet, daß ein bevorzugter Weichmacher in einer Konzentration von 3 bis 60 Gewichtsteilen je 100 Gewichtsteile des neutralisierten sulfonierten elastomeren Polymers zugesetzt wird.

9. Verfahren nach Anspruch 7 oder 8, dadurch gekennzeichnet, daß dem neutralisierten, sulfonierten elastomeren Polymer ein anderes Additiv als ein bevorzugter Weichmacher in einer Konzentration von weniger als 300 Gewichtsteilen je 100 Gewichtsteile des neutralisierten sulfonierten elastomeren Polymers zugesetzt wird.

10. Verfahren nach Anspruch 9, dadurch gekennzeichnet, daß das Additiv ein Öl, ein Füllstoff, ein Wachs, ein Pigment, ein Stabilisierungsmittel oder eine Mischung derselben ist.

11. Verfahren nach jedem der vorangegangenen Ansprüche, dadurch gekennzeichnet, daß das Sulfonierungsmittel aus einer Mischung des $(RCO)_2O$ und des Komplexes gebildet ist.

12. Verfahren nach jedem der Ansprüche 1 bis 10, dadurch gekennzeichnet, daß das Sulfonierungsmittel aus einer Mischung des $(RCO)_2O$, des RCOCl und des Komplexes gebildet ist.

13. Verfahren nach jedem der Ansprüche 1 bis 10, dadurch gekennzeichnet, daß das Sulfonierungsmittel aus einer Mischung von RCOCl und dem Komplex gebildet ist.

14. Verfahren nach jedem der Ansprüche 1 bis 10, dadurch gekennzeichnet, daß das Sulfonierungsmittel aus einer Mischung des $(RCO)_2O$ und konzentrierter $H_2SO_4$ gebildet ist.

15. Verfahren nach jedem der Ansprüche 1 bis 10, dadurch gekennzeichnet, daß das Sulfonierungsmittel aus einer Mischung des $(RCO)_2O$, $RCO_2H$ und $SO_3$ gebildet ist.

16. Verfahren nach jedem der Ansprüche 1, 2 und 4 bis 10, dadurch gekennzeichnet, daß das Sulfonierungsmittel aus einer Mischung des $(RCO)_2O$ und $ClSO_3H$ gebildet ist.

17. Verfahren nach jedem der Ansprüche 1 bis 10, dadurch gekennzeichnet, daß das Sulfonierungsmittel aus einer Mischung von RCOCl und $H_2SO_4$ gebildet ist.

18. Verfahren nach jedem der Ansprüche 1 bis 10, dadurch gekennzeichnet, daß das Sulfonierungsmittel eine Mischung von RCOX, $(RCO)_2O$ und $ClSO_3H$ ist.

19. Verfahren nach jedem der Ansprüche 1 bis 10, dadurch gekennzeichnet, daß das Sulfonierungsmittel aus einer Mischung von $(RCO)_2O$, $RCO_2M$ und $ClSO_3H$ gebildet ist, wobei M Lithium, Natrium, Kalium, Cäsium oder eine Mischung derselben ist.

20. Verfahren nach jedem der Ansprüche 1 bis 10, dadurch gekennzeichnet, daß das nichtreaktive Lösungsmittel für die Mischung des Komplexes und $(RCO)_2O$ oder RCOX ein aliphatischer Kohlenwasserstoff, ein chlorierter aliphatischer Kohlenwasserstoff, ein aromatischer Kohlenwasserstoff, ein chlorierter aromatischer Kohlenwasserstoff oder eine Mischung derselben ist.

21. Verfahren nach jedem der Ansprüche 1 bis 10, dadurch gekennzeichnet, daß das nichtreaktive Lösungsmittel für die Mischung von $RCO_2SO_3H$ und $(RCO)_2O$ oder RCOX eine aliphatische oder cycloaliphatische gesättigte Kohlenstoff-Wasserstoff-Verbindung mit 4 bis 7 Kohlenstoffatomen je Molekül ist.